# EUROPÄISCHE PATENTSCHRIFT

(11) **EP 2 312 712 B1**
(45) Veröffentlichungstag und Bekanntmachung des Hinweises auf die Patenterteilung: **27.08.2014**
(21) Anmeldenummer: 10013775.1
(22) Anmeldetag: 19.10.2010
(51) Int. Cl.: H02G 3/08, H01L 31/048

(54) **Anschlußdose, Verfahren zum Herstellen eines Solarpaneels, Deckelvorrichtung und Verwendung der Deckelvorrichtung**
Connection socket, method for producing a solar panel, cover device and use of same
Boîte de jonction, procédé de fabrication d'un panneau solaire, dispositif de couvercle et utilisation du dispositif de couvercle

(30) Priorität: 19.10.2009 DE 102009049812
(43) Veröffentlichungstag der Anmeldung: 20.04.2011
(73) Patentinhaber: Yamaichi Electronics Deutschland GmbH, 85609 Aschheim-Dornach (DE)
(72) Erfinder: Quiter, Michael, 57482 Wenden (DE); Eberle, Erwin, 80687 München (DE)
(74) Vertreter: Müller-Boré & Partner Patentanwälte PartG mbB

(56) Entgegenhaltungen:
- EP-A2- 1 448 038
- EP-A2- 1 729 369
- DE-U1-202008 006 120
- US-B1- 6 582 249

## Beschreibung

Die Erfindung betrifft eine Anschlußdose, ein Verfahren zum Herstellen eines Solarpaneels, eine Deckelvorrichtung sowie eine Verwendung der Deckelvorrichtung.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellende Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt. Die elektrischen Anschlüsse der Solarzellengruppen des Solarmoduls werden nach außen geführt.

Um die hinlänglich bekannten Probleme in Hinsicht auf eine unterschiedliche Bestrahlungsintensität auf die einzelnen Solarzellen bzw. Solarmodule zu lösen, werden herkömmlich sogenannte Bypass-Dioden verwendet, die elektrisch antiparallel zu den Solarzellengruppen geschaltet werden. Diese Bypass-Dioden haben die Wirkung, daß der Stromfluß durch das Solarmodul an Solarzellengruppen, welche eine nur geringe Leistung liefern, vorbei geleitet wird, d.h. die Anschlüsse dieser Solarzellengruppe eines Solarmoduls werden durch die Bypass-Diode kurz geschlossen und die entsprechende Solarzellengruppe dadurch überbrückt.

Solarpaneele, umfassen daher neben dem Solarmodul in der Regel eine elektrische Anschlußdose mit zumindest zwei Kontaktvorrichtungen und zumindest einer Bypass-Diode. Die Solarzellen in einem Solarmodul sind in der Regel zwischen zwei Glasplatte angeordnet und durch flache dünne Leiterbänder miteinander verbunden. Diese Leiterbänder werden durch Öffnungen in einer der Glasplatten aus dem Solarmodul heraus geführt und mit in der Anschlußdose angeordneten elektrischen Kontaktelementen kontaktiert. Zum Schutz vor feuchtigkeitsbedingter Korrosion der elektrischen Bauelemente (d.h. der Kontaktvorrichtungen, der Bypass-Diode und gegebenenfalls weiterer Bauelemente) ist das Innere der Anschlußdose in der Regel mit einem Füllmaterial bzw. einer Vergußmasse ausgefüllt bzw. ausgegossen. Das mit der Anschlußdose versehene und elektrisch verbundene Solarmodul wird als Solarpaneel bezeichnet.

Aufgrund von unterschiedlichen Ausführungen der Solarmodule, die mit einer Anschlußdose versehen werden müssen, von unterschiedlich dimensionierten elektrischen Bauteilen, die in der Anschlußdose angeordnet sind, oder von Fertigungstoleranzen, ist es regelmäßig notwendig, daß die Menge des Füllmaterials bzw. der Vergußmasse, die in das Innere der Anschlußdose eingefüllt werden muß, auf das verwendete Solarmodul und die zugeordnete Anschlußdose abgestimmt sind, um ein hinreichend gutes Vergießen der Anschlußdose zu gewährleisten.

Die Druckschriften US 6 582 249 B1, EP 1 448 038 A2, EP 1 729 369 A2 und DE 20 2008 006 120 U1 offenbaren herkömmliche Anschlußdosen, welche mit einer Vergußmasse vollständig gefüllt und anschließend mit einem Deckel verschlossen werden können.

Es ist daher Aufgabe der Erfindung, eine effizientere Herstellung eines Solarpaneels zu ermöglichen, welches eine erhöhte Betriebssicherheit aufweist.Die Aufgabe wird durch eine Anschlußdose gemäß Anspruch 1, ein Verfahren zum Herstellen eines Solarpaneels gemäß Anspruch 9, eine Deckelvorrichtung gemäß Anspruch 12 und eine Verwendung der Deckelvorrichtung gemäß Anspruch 15 gelöst. Bevorzugte Ausführungsformen sind Gegenstand der abhängigen Ansprüche.

### Anschlußdose

Ein erster Aspekt der Erfindung betrifft eine Anschlußdose, insbesondere für ein Solarmodul, umfassend:
- eine Deckelvorrichtung mit einem Verdrängerelement,
- eine Gehäusevorrichtung mit einem Funktionsinnenraum und
- ein Reservoir,
wobei der Funktionsinnenraum hydraulisch mit dem Reservoir verbindbar ist und wobei in einer Anordnungsposition das Verdrängerelement das Innenraumvolumen V_{I} des Funktionsinnenraums um ein vorbestimmtes Verdrängungsvolumen V_{V} verkleinert.

Vorteilhafterweise wird durch die in der Anordnungsposition befindliche Deckelvorrichtung ein vorbestimmtes Verdrängungsvolumen Vᵥ aus dem Funktionsinnenraum der Gehäusevorrichtung verdrängt. Der Funktionsinnenraum kann dabei elektrische bzw. elektronische Bauteile enthalten, die zum Anschluß des Solarmoduls an einen externen elektrischen Verbraucher verwendet werden. Insbesondere für den Fall, daß der Funktionsinnenraum vor dem Anordnen der Deckelvorrichtung mit einem Füllmaterial bzw. einer Vergußmasse gefüllt wurde, ist ein vorbestimmtes Verdrängungsvolumen Vv des Füllmaterials aus dem Funktionsinnenraum verdrängt bzw. ist das Volumen des Füllmaterial innerhalb des Funktionsinnenraums verkleinert. Vorteilhafterweise ist es daher nicht notwendig, den Funktionsinnenraum vor dem Anordnen der Deckelvorrichtung vollständig mit dem Füllmaterial zu füllen. Dadurch kann zum einen vorteilhafterweise ein im wesentlichen dem Verdrängungsvolumen Vv entsprechendes Volumen an Füllmaterial eingespart werden. Zum anderen ist es vorteilhafterweise nicht notwendig eine vorbestimmte Füllhöhe des Füllmaterials in dem Funktionsinnenraum exakt einzuhalten, was aufgrund von Volumenvariationen des Funktionsinnenraum, beispielsweise in Folge von Fertigungstoleranzen, eine aufwendige Regelung der Füllhöhe erfordern würde. Statt dessen kann überschüssiges Füllmaterial durch das Verdrängerelement aus dem Funktionsinnenraum verdrängt sein und insbesondere eine vollständige Füllung des Funktionsinnenraums vorliegen. Vorteilhafterweise kann durch eine vollständige Füllung des Funktionsinnenraums ein Schutz von in dem Funktionsinnenraum angeordneten elektrischen Bauelementen vor Feuchtigkeit, insbesondere gemäß der Norm IP 67, erzielt werden.

Der Begriff "Anordnungsposition", wie er im Sinne der vorliegenden Erfindung verwendet wird, beschreibt beispielsweise den Zustand bzw. die Position der Deckelvorrichtung in Relation zur Gehäusevorrichtung. Der Begriff "Anordnungsposition", beschreibt diejenige Position, in der sich die Deckelvorrichtung befindet, wenn die Gehäusevorrichtung bzw. die Anschlußdose an dem Solarmodul angeordnet ist und durch die Deckelvorrichtung geschlossen ist. Dies ist insbesondere der Zustand des betriebsmäßigen Gebrauchs der Anschlußdose bzw. des Solarpaneels. In anderen Worten ist eine vorbestimmte Öffnung der Gehäusevorrichtung in der Anordnungsposition durch die Deckelvorrichtung verschlossen und bevorzugt ist die Deckelvorrichtung an der Gehäusevorrichtung befestigt und/oder mit der Gehäusevorrichtung verriegelt. Weiter kann die Anordnungsposition dadurch charakterisiert sein, daß der Funktionsinnenraum bzw. das Innere der Gehäusevorrichtung in der Anordnungsposition durch die Deckelvorrichtung zumindest bereichsweise begrenzt bzw. abgeschlossen ist.

Der Begriff "inneres" der Gehäusevorrichtung bzw. "Innenraum" im Sinne des Funktionsinnenraums beschreibt in diesem Zusammenhang ein Volumen, das von der Gehäusevorrichtung der Anschlußdose umgrenzt wird, d.h. ein Innenvolumen der Anschlußdose. Hierbei ist es nicht notwendig, daß die Gehäusevorrichtung eine geschlossene Außenfläche aufweist. Beispielsweise kann die Gehäusevorrichtung eine Ausnehmung bzw. Öffnung aufweisen, wobei der Begriff des,,lnneren" bzw. des ,,(Funktions-)Innenraums" das Innenvolumen der Gehäusevorrichtung derart beschreibt, als ob die Ausnehmung bzw. die Öffnung durch die Deckelvorrichtung verschlossen wäre.

Eine hydraulische Verbindung zwischen dem Funktionsinnenraum und dem Reservoir im Sinne der Erfindung bedeutet, daß ein Fluid (also ein gasförmiger oder ein flüssiger Stoff) von dem Funktionsinnenraum in das Reservoir oder zurück fließen bzw. migrieren kann. Eine hydraulische Verbindung kann beispielsweise über einen Verbindungskanal, eine Verbindungsöffnung oder einen porösen Verbindungskörper hergestellt sein. Insbesondere können Fluide, wie beispielsweise ein im Funktionsinnenraum befindliches Füllmaterials, die eine Viskosität größer als etwa 0,5 Nsm-² (entspricht 5 Poise), vorzugsweise größer als etwa 1 Nsm⁻² (10 Poise), weiter vorzugsweise größer als etwa 30 Nsm⁻² (100 Poise), bevorzugt größer als etwa 10 Nsm⁻² (100 Poise), insbesondere größer als 100 Nsm⁻² (1000 Poise), aufweisen, über die hydraulische Verbindung aus dem Funktionsinnenraum in das Reservoir überführt werden bzw. durch die hydraulische Verbindung fließen.

Das "Reservoir" ist im Sinne der Erfindung beschreibt ein Volumen, welches ausgelegt ist ein Material, insbesondere eine Flüssigkeit und/oder ein Fluid, aufzunehmen. Dieses Reservoir ist bevorzugt zumindest bereichsweise durch die Deckelvorrichtung umgrenzt, wobei es nicht notwendig ist, daß das Reservoir eine geschlossene Umgrenzung aufweist, solange die Deckelvorrichtung nicht in der Anordnungsposition befindlich ist. Das Reservoir ist ein Element der Anschlußdose, kann also in bzw. an der Gehäusevorrichtung bzw. der Deckelvorrichtung ausgebildet sein bzw. einstückig mit der Gehäusevorrichtung bzw. der Deckelvorrichtung geformt sein. Vorzugsweise ist das Reservoir Bestandteil der Deckelvorrichtung. Beispielsweise kann die Deckelvorrichtung eine Ausnehmung bzw. einen Hohlraum aufweisen, wobei der Begriff des "Reservoirs" das Innenvolumen der Ausnehmung bzw. des Hohlraums derart beschreibt, als ob die Ausnehmung bzw. der Hohlraum verschlossen wäre, insbesondere durch die Gehäusevorrichtung in der Anordnungsposition.

Vorzugsweise ist ein im Funktionsinnenraum befindliches Fluid, insbesondere ein Füllmaterial, durch das Verdrängerelement aus dem Funktionsinnenraum verdrängbar und zumindest teilweise in das Reservoir überführbar.

Vorzugsweise ist das vorbestimmte Verdrängungsvolumen Vᵥ größer als 5 Prozent des Innenraumvolumens Vₗ. Weiter vorzugsweise ist das vorbestimmte Verdrängungsvolumen Vᵥ größer als 10 Prozent oder 15 Prozent des Innenraumvolumens Vₗ. Weiter vorzugsweise ist das vorbestimmte Verdrängungsvolumen Vᵥ kleiner als 90 Prozent oder 75 Prozent des Innenraumvolumens Vₗ. Vorteilhafterweise kann in Abhängigkeit von der Größe des Verdrängungsvolumens Vᵥ ein entsprechendes Volumen an Füllmaterial eingespart werden, mit welchem der Funktionsinnenraum gefüllt werden könnte. Zum anderen sind vorteilhafterweise die noch tolerierbaren Variationen in der Füllhöhe des Füllmaterials im Funktionsinnenraum mit steigendem Verdrängungsvolumen größer.

Vorzugsweise ist das Volumen V_{R} des Reservoirs größer oder gleich dem Verdrängungsvolumen Vᵥ. Dadurch ist vorteilhafterweise gewährleistet, daß das gesamte aus dem Funktionsinnenraum verdrängte Material, insbesondere das Füllmaterial, in Höhe des Verdrängungsvolumens Vᵥ in dem Reservoir aufgenommen werden kann. Dadurch kann insbesondere vermiedet werden, daß Füllmaterial aus dem Funktionsinnenraum in das Äußere der Anschlußdose bzw. in die Umgebung verdrängt wird und dort zu Kontaminationen führt.

Vorzugsweise ist das Verdrängerelement zumindest bereichsweise als Reservoir ausgebildet. Vorteilhafterweise kann die Deckelvorrichtung dadurch kompakt bzw. platzsparend und zugleich materialsparend hergestellt werden. Insbesondere ist das Verdrängerelement zumindest bereichsweise als Hohlkörper ausgebildet, so daß in der Anordnungsposition das Reservoir bevorzugt im wesentlichen durch die Wandung des Verdrängerelements vom Funktionsinnenraum getrennt ist.

Vorzugsweise weist die Anschlußdose, insbesondere die Deckeleinrichtung der Anschlußdose eine Sperreinrichtung auf, durch welche eine hydraulische Verbindung zwischen dem Funktionsinnenraum und dem Reservoir sperrbar ist. Vorteilhafterweise kann durch die Sperreinrichtung eine Verlagerung von noch flüssigem Füllmaterial aus dem Funktionsinnenraum verhindert werden, so daß der Funktionsinnenraum bevorzugt vollständig durch aushärtendes Füllmaterial gefüllt bleibt, um eine vollständige Kapselung der in dem Funktionsinnenraum befindlichen Bauelemente zu erhalten.

Sowohl die hydraulische Verbindung zwischen dem Reservoir und dem Funktionsinnenraum als auch die dazugehörige Sperreinrichtung können in verschiedenen Ausführungsformen ausgebildet sein. Bevorzugt kann das Reservoir als zur Anordnungseite der Deckelvorrichtung offene Ausnehmung ausgebildet sein, welche ausreichend groß ist, um das verdrängte Volumen auszunehmen. Weiter bevorzugt kann das Reservoir als ein Hohlraum in der Deckelvorrichtung ausgebildet sein, welcher mit dem Äußeren der Deckelvorrichtung über eine durchgängige Öffnung bzw. ein Loch in der das Reservoir umgebenden Wandung oder einen Kanal bzw. eine Röhre hydraulisch kommuniziert. Dabei kann in der Anordnungsposition eine hydraulische Verbindung zwischen dem Reservoir und dem Funktionsinnenraum der Gehäusevorrichtung hergestellt sein. Dementsprechend kann die Sperreinrichtung beispielsweise als Rückschlagventil ausgebildet sein, welche die Öffnung oder den Kanal derart sperrt, daß ein Fließen von Füllmaterial aus dem Funktionsinnenraum in das Reservoir möglich ist, jedoch ein Zurückfließen gesperrt ist. Bevorzugt kann die Sperreinrichtung als schwenkbar bzw. drehbar gelagerte Klappe ausgebildet sein, welche insbesondere an der Öffnung innerhalb des Reservoirs angeordnet ist und lediglich in Richtung des Reservoirinneren schwenkbar ist, wohingegen eine Kraft, welche in Richtung des Reservoiräußeren auf die Klappe wirkt, diese gegen die Öffnung bzw. den Öffnungsrand preßt, um die Öffnung zu verschließen und das Fließen aus dem Reservoir hinaus sperrt. Weiter kann die Sperreinrichtung einen Zapfen oder einen Stopfen umfassen, welcher beispielsweise an der Gehäusevorrichtung angeordnet ist, um die Offnung in der Anordnungsposition zu verschließen.

Vorzugsweise ist die Sperreinrichtung an dem Verdrängerelement angeordnet. Bevorzugt ist die Sperreinrichtung zusammen mit dem Verdrängerelement, insbesondere einstückig aus einem Kunststoff, ausgebildet. Vorteilhafterweise kann die Sperreinrichtung einfach hergestellt werden, insbesondere durch Spritzgießen aus einem thermoplastischen Kunststoff.

Vorzugsweise umfaßt die Anschlußdose ein Aktuationselement, welches die Sperreinrichtung in der Anordnungsposition aktuiert, um die hydraulische Verbindung zu verschließen. Vorteilhafterweise sperrt die Sperreinrichtung in der Anordnungsposition bzw. in der Betriebsposition dauerhaft die hydraulische Verbindung zwischen Funktionsinnenraum und Reservoir.

Vorzugsweise umfaßt die Anschlußdose weiter:
- einen an der Deckelvorrichtung angeordneten Dichtbereich;
- einen an der Gehäusevorrichtung angeordneten komplementären Dichtbereich, wobei in der Anordnungsposition der Deckelvorrichtung der Dichtbereich den komplementären Dichtbereich kontaktiert, um den Funktionsinnenraum vom Äußeren der Anschlußdose abzudichten.

Der Begriff abdichten umfaßt im Sinne der Erfindung, daß ein Füllmaterial, insbesondere ein zähflüssiges Füllmaterial, nicht aus dem Inneren der Anschlußdose bzw. aus dem Funktionsinnenraum in das Äußere gelangen kann. Insbesondere bedeutet "abdichten", daß ein Durchfließen von Fluiden mit einer Viskosität größer als etwa 0,5 Nsm⁻² (entspricht 5 Poise), vorzugsweise größer als etwa 1 Nsm⁻² (10 Poise), weiter vorzugsweise größer als etwa 30 Nsm⁻² (100 Poise), bevorzugt größer als etwa 10 Nsm⁻² (100 Poise), insbesondere größer als 100 Nsm⁻² (1000 Poise), zwischen dem Dichtbereich und dem komplementären Dichtbereich nicht stattfindet. Beispielsweise kann "abdichten" auch ein feuchtigkeitsdichtes und/oder ein gasdichtes Verschließen des Funktionsinnenraums umfassen. Es ist auch möglich, daß die Abdichtung feuchtigkeitsdicht erfolgt, jedoch Gase den Dichtbereich bzw. den komplementären Dichtbereich passieren können, beispielsweise beim Aushärten des Füllmaterials.

Vorzugsweise ist das Verdrängerelement an einem Verdrängerelementanordnungsbereich der Deckelvorrichtung angeordnet, welcher von dem Dichtbereich umfangen ist. Mit anderen Worten befindet sich der Verdrängerelementanordnungsbereich und insbesondere das Verdrängerelement in einer Draufsicht auf die Anordnungsseite der Deckelvorrichtung innerhalb des Dichtbereichs der Deckelvorrichtung.

Vorzugsweise umfaßt die Anschlußdose weiter:
- zumindest eine Kontaktvorrichtung mit
   -- zumindest zwei Kontaktelementen und
   -- zumindest einer Diode, welche die zumindest zwei Kontaktelemente elektrisch kontaktiert,
wobei die zumindest eine Kontaktvorrichtung zumindest bereichsweise innerhalb des Funktionsinnenraums angeordnet ist,
wobei die Gehäusevorrichtung ausgelegt ist, mit einer Anordnungsseite an dem Solarmodul angeordnet zu werden, und
wobei die Kontaktelemente der Kontaktvorrichtung entlang einer Verlagerungsrichtung Z, die mit dem Normalenvektor der Anordnungsseite einen Winkel-kleiner als 90 Grad einschließt, verlagerbar sind.

Vorteilhafterweise können die Kontaktelemente mit einer Vielzahl von unterschiedlichen Solarmodulen kontaktiert werden, wobei die Solarmodule auf der Anschlußseite angeordnete oder darin versenkt angeordnete elektrische Leiter aufweisen können. Zweckmäßigerweise sind die Kontaktelemente der Kontaktvorrichtung weiter entlang der Verlagerungsrichtung Z verlagerbar als der Abstand zwischen den elektrischen Leitern und der Oberfläche der Anschlußseite des Solarmoduls, an welchem die Anschlußdose befestigt werden soll, gemessen entlang der Verlagerungsrichtung Z. Vorteilhafterweise muß lediglich ein Typ einer Anschlußdose für die verschiedenen zu bestückenden Solarmodule mit unterschiedlichen Versenktiefen der elektrischen Leiter bevorratet werden, was zu einem verringertem Lagerraumbedarf führt. Weiter vorteilhafterweise können Fertigungstoleranzen in einer Serie der zu bestückenden Solarmodule mittels der verlagerbaren Kontaktelemente in einfacher Weise ausgeglichen werden, so daß die Anforderungen an die Fertigungstoleranzen geringer sein können, so daß weniger Solarmodule als Ausschuß klassifiziert werden müssen. Weiter vorteilhafterweise kann eine Variation des mit Füllmaterial zu füllenden Innenraumvolumens Vₗ des Funktionsinnenraums der Gehäusevorrichtung, bedingt durch wechselnde Solarmodule oder durch Fertigungstoleranzen, dahingehend ausgeglichen werden, daß das Volumen des eingefüllten Füllmaterials nicht exakt dem Innenraumvolumen Vₗ des Funktionsinnenraums der Gehäusevorrichtung entsprechen muß, sondern geringer sein kann. Insbesondere kann das beispielsweise durch eine automatische Fülleinrichtung in die Gehäusevorrichtung eingefüllte Volumen an Füllmaterial dem minimalen in einer Produktionsserie zu erwartenden dem Innenraumvolumen Vₗ des Funktionsinnenraums entsprechen, so daß vorteilhafterweise kein Füllmaterial während des Einfüllens aus der Gehäusevorrichtung läuft und die Gehäusevorrichtung bzw. die Produktionsstätte kontaminiert. Das zumindest bereichsweise Einführen des Verdrängerelements der Deckelvorrichtung in den Funktionsinnenraum führt dazu, daß der verbleibende Funktionsinnenraum mit dem Füllmaterial bevorzugt vollständig ausgefüllt wird, wobei überschüssiges Füllmaterial in das Reservoir der Deckelvorrichtung fließt und nicht in den Außenraum der Anschlußdose, d.h. nicht in die Umgebung.

Das Merkmal, daß die Gehäusevorrichtung ausgelegt ist, mit einer Anordnungsseite an dem Solarmodul angeordnet zu werden, beinhaltet, daß wenn die Anordnungsseite der Gehäusevorrichtung an dem Solarmodul angeordnet ist, die Gehäusevorrichtung einen vorgegebenen Zweck erfüllt, beispielsweise die elektrische Verbindung herzustellen bzw. zu ermöglichen. Somit ist die Anordnungsseite an das Solarmodul strukturell bzw. gegenständlich angepaßt. Insbesondere ist die Anordnungsseite der Gehäusevorrichtung bzw. der Anschlußdose zumindest bereichsweise eben bzw. als ebene Fläche ausgebildet.

Die zumindest eine Kontaktvorrichtung ist zumindest bereichsweise innerhalb des Funktionsinnenraums angeordnet. Das heißt, daß der Funktionsinnenraum insbesondere als Öffnung bzw. Ausnehmung bzw. Hohlraum in der Gehäusevorrichtung ausgebildet ist und daß die Kontaktvorrichtung zumindest partiell oder vollständig im Funktionsinnenraum, d.h. im Inneren der Gehäusevorrichtung, angeordnet ist. Mit anderen Worten wird die Kontaktvorrichtung zumindest bereichsweise oder vollständig von der Gehäusevorrichtung umfangen.

Die Kontaktvorrichtung umfaßt zumindest zwei Kontaktelemente, wobei die Anzahl der Kontaktelemente beispielsweise auch 3, 4, 5, 6, 7 ,8 ,9 usw., also jede natürliche Zahl N größer als 2, betragen kann. Jeweils zwei Kontaktelemente sind durch eine zugeordnete Diode elektrisch miteinander verbunden bzw. kontaktiert. Bevorzugt sind paarweise voneinander verschiedene Kontaktelemente miteinander elektrisch durch eine zugeordnete Diode kontaktiert, wobei die Anzahl der Dioden gleich N-1 ist, d.h. daß die Anzahl der Dioden beispielsweise 1, 2, 3, 4, 5, 6, 7, 8 usw. ist, wenn die Anschlußdose 2, 3, 4, 5, 6, 7, 8, 9 usw. Kontaktelemente umfaßt.

Es versteht sich, daß die einzelnen Kontaktelemente der Kontaktvorrichtung miteinander mechanisch starr verbunden oder relativ zueinander verlagerbar ausgebildet sein können.

Bevorzugt können die Kontaktelemente jeweils aus einem elektrisch leitfähigen Material ausgebildet sein, insbesondere einer Kupferlegierung. Die Kontaktelemente können mittels einer Verbindungseinrichtung miteinander mechanisch, insbesondere starr, verbunden sein, so daß die Kontaktelemente nur gemeinsam verlagerbar bzw. relativ zueinander nicht verlagerbar sind. Alternativ ist es auch möglich, daß die Kontaktelemente individuell verlagerbar sind. Vorzugsweise können die Kontaktelemente an bzw. auf einer Leiterplatte bzw. einer gedruckten Schaltung angeordnet sein. Insbesondere können die Kontaktelemente als elektrisch leitfähiger Bereich einer gedruckten Schaltung ausgebildet sein, wobei das elektrisch leitfähige Material der Leiterplatte zwischen den einzelnen Kontaktelementen entfernt ist, so daß die Kontaktelemente lediglich mittels der Dioden elektrisch verbunden sind. Die Leiterplatte bzw. die dadurch ausgebildete elektrische Schaltung ist bevorzugt entlang der Verlagerungsrichtung Z verlagerbar.

Weiter bevorzugt können die Kontaktelemente zumindest bereichsweise aus einem elastisch rückstellfähigen Material ausgebildet sein bzw. damit verbunden sein. Insbesondere können die Kontaktelemente bereichsweise mittelbar oder unmittelbar an der Gehäusevorrichtung befestigt bzw. mit dieser verbunden sein, wobei die Kontaktelemente vorzugsweise unabhängig voneinander verlagerbar sind bzw. relativ zueinander verlagerbar sind.

Die Kontaktelemente der Kontaktvorrichtung können verlagerbar sein. Die Verlagerung kann dabei entlang einer Verlagerungsrichtung Z erfolgen, die bevorzugt im wesentlichen senkrecht auf der Anordnungsseite steht. Das heißt, daß die Verlagerungsrichtung Z in dem Bereich der Anordnungsseite, der in etwa eben bzw. plan ausgebildet ist, um an dem Solarmodul angeordnet zu werden, im wesentlichen mit der Flächennormalen der Anordnungsseite zusammenfällt. Der Begriff ,,im wesentlichen" mit Bezug auf die lineare Bewegung entlang Verlagerungsrichtung Z beschreibt, daß neben einer geradlinigen, linearen Bewegung eine geringfügige Schwenk- bzw. Kippbewegung der Kontaktelemente bzw. von Bereichen der Kontaktvorrichtung auftreten kann. Der Begriff ,,im wesentlichen" beschreibt hierbei eine Abweichung der Verlagerungsrichtung Z von weniger als etwa 30 Grad, weniger als etwa 20 Grad, bevorzugt weniger als etwa 10 Grad und weiter bevorzugt weniger als etwa 5 Grad bezogen auf die Flächennormale der Anordnungsseite. Insbesondere ist die Verlagerungsrichtung Z im Rahmen der Meß- und Fertigungstoleranzen identisch zu der Flächennormalen der Anordnungsseite. Der Begriff "im wesentlichen" umfaßt dabei den Begriff "identisch" bzw. "ohne Abweichung".

Bevorzugt sind zumindest die Kontaktelemente der Kontaktvorrichtung um etwa 2 mm bis etwa 10 mm, besonders bevorzugt um etwa 3 mm bis etwa 7 mm entlang der Verlagerungsrichtung Z verlagerbar.

Vorzugsweise steht die Verlagerungsrichtung Z im wesentlichen senkrecht auf der Anordnungsseite. Es versteht sich aber, daß ein gleichwertiger technischer Effekt auftritt, wenn die Verlagerungsrichtung Z mit dem Normalenvektor der Anordnungsseite einen bevorzugten Winkel von etwa 45 Grad, von etwa 30 Grad oder von etwa 15 Grad einschließt.

Vorzugsweise sind die Kontaktelemente in einer Initialposition vollständig im Funktionsinnenraum angeordnet. Insbesondere bevor sich die Anschlußdose bzw. die Kontaktelemente sich einer Kontaktposition befindet, ist die Kontaktvorrichtung bzw. sind die Kontaktelemente im wesentlichen oder vollständig innerhalb des Funktionsinnenraums, d.h. im Inneren der Gehäusevorrichtung, angeordnet. Weiter vorzugsweise ist die Kontaktvorrichtung in der Initialposition vollständig im Inneren der Gehäusevorrichtung angeordnet.

Vorteilhafterweise ragt kein Element bzw. Bereich der Kontaktvorrichtung, insbesondere die Kontaktelemente, über die Fläche der Anordnungsseite, insbesondere entlang der Verlagerungsrichtung Z bzw. der Flächennormalen der Anordnungsseite, hinaus, so daß die Kontaktvorrichtung bzw. die Kontaktelemente in der Initialposition vor mechanischer Beanspruchung und Beschädigung geschützt ist bzw. sind.

Der Begriff "initiaiposition", wie er im Sinne der vorliegenden Erfindung verwendet wird, beschreibt beispielsweise den Zustand bzw. die Position eines oder mehrerer elektrischer Bauteile, insbesondere der Kontaktvorrichtung bzw. von Bestandteilen der Kontaktvorrichtung, wie beispielsweise den Kontaktelementen. Der Begriff "Initialposition", wie er im Sinne der vorliegenden Erfindung verwendet wird, beschreibt insbesondere diejenige Position, in der sich Kontaktelemente befinden, wenn die Gehäusevorrichtung bzw. die Anschlußdose nicht an dem Solarmodul angeordnet ist bzw. sind, d.h. insbesondere im Zustand der werksmäßigen Auslieferung. In anderen Worten ist die Kontaktvorrichtung bzw. sind die Kontaktelemente in der Initialposition noch nicht entlang der Verlagerungsrichtung Z verlagert worden und die Kontaktelemente haben in der Initialposition keinen elektrischen und/oder mechanischen Kontakt mit den zugeordneten elektrischen Leitern des Solarmoduls.

Vorzugsweise sind die Kontaktelemente ausgehend von der Initialposition zu einer Kontaktposition durch einen anordnungsseitigen Öffnungsbereich der Gehäusevorrichtung durch die Ebene der Anordnungsseite hindurch verlagerbar. Mit anderen Worten treten die Kontaktelemente durch die von der Anordnungsseite aufgespannte Ebene hindurch, d.h. durch die untere Oberfläche der virtuell geschlossenen Gehäusevorrichtung hindurch.

Der Begriff "Kontaktposition", wie er im Sinne der vorliegenden Erfindung verwendet wird, beschreibt beispielsweise den Zustand bzw. die Position der vorgenannten elektrischen Bauteile, insbesondere der Kontaktvorrichtung bzw. von Bestandteilen der Kontaktvorrichtung, wie beispielsweise der Kontaktelemente. In der Kontaktposition üben die Kontaktelemente bevorzugt eine Kraft bzw. eine mechanische Spannung auf die elektrischen Leiter des Solarmoduls aus. Insbesondere wird in der Betriebsposition ermöglicht, daß ein oder mehrere elektrische Leiter des Solarmoduls die zugeordneten Kontaktelemente der Kontaktvorrichtung elektrisch kontaktieren. Der Begriff "Kontaktposition", wie er im Sinne der vorliegenden Erfindung verwendet wird, beschreibt somit insbesondere eine Position gemäß der die Kontaktelemente jeweils an den zugeordneten elektrischen Leitern des Solarmoduls anliegen bzw. angepreßt werden oder damit verlötet, verschweißt, vernietet, verklebt oder ähnliches sind.

Bevorzugt weist die Gehäusevorrichtung zumindest ein Führungselement und die Kontaktvorrichtung zumindest ein komplementäres Führungselement auf, wobei in der Initialposition und in der Kontaktposition das zumindest eine Führungselement mit einem zugeordneten komplementären Führungselement in Eingriff ist. Vorteilhafterweise wird die zumindest bereichsweise Verlagerung der Kontaktvorrichtung bzw. die Verlagerung der Kontaktelemente entlang der Verlagerungsrichtung Z mittels des Führungselements bzw. der Führungselemente und des komplementären Führungselements bzw. der komplementären Führungselemente geführt, das heißt, daß eine dazu transversale Verlagerung, also eine Verlagerung senkrecht zur Verlagerungsrichtung V, gehemmt ist.

Bevorzugt weist die Kontaktvorrichtung zumindest zwei Anschlußelemente auf. Die Anschlußelemente sind ausgelegt, die durch das Solarmodul erzeugte und mittels der Kontaktelemente abgegriffene elektrische Leistung einem externen Verbraucher zur Verfügung zu stellen. Weiter bevorzugt sind die Anschlußelemente mit jeweils einem zugeordneten Anschlußpol eines zugeordneten Verbinders kontaktiert. Besonders bevorzugt sind die zugeordneten Verbinder integral bzw. einstückig mit der Gehäusevorrichtung ausgebildet. Weiter bevorzugt ist zumindest eines der Kontaktelemente sowie eines der Anschlußelemente und/oder eines der komplementären Führungselemente zusammen einstückig ausgebildet, insbesondere als ein Blechstanzteil. Bevorzugt weisen die Kontaktelemente eine durchgängige Ausnehmung auf, so daß die Kontaktelemente in der Kontaktposition durch ein Befestigungsmittel, beispielsweise ein Lötmittel oder ein elektrisch leitfähiges Klebemittel, an dem zugeordneten elektrischen Leiter des Solarmoduls im Bereich der durchgängigen Ausnehmung festlegbar sind.

Bevorzugt ist die Gehäusevorrichtung einstückig ausgebildet und insbesondere durch Spritzgießen hergestellt. Vorteilhafterweise ist die Gehäusevorrichtung einfach herzustellen. Weiter bevorzugt weist die Gehäusevorrichtung zumindest zwei Verbinder auf. Es versteht sich, daß anstelle eines Verbinders oder mehrerer Verbinder ein Anschlußkabel direkt mit der Gehäusevorrichtung verbunden sein kann, wobei ein elektrischer Anschlußleiter des Anschlußkabels mit dem zugeordneten Anschlußelement der Kontaktvorrichtung verbunden ist. Bevorzugt kann der Endbereich des Anschlußkabels von der Gehäusevorrichtung derart umfangen sein, daß die Verbindung zwischen Anschlußkabel und Gehäusevorrichtung feuchtigkeitsdicht ist. Der Begriff "feuchtigkeitsdicht" bedeutet insbesondere, daß die Anforderungen der Norm 1P67 erfüllt werden.

### Verfahren zum Herstellen eines Solarpaneels

Ein zweiter Aspekt der Erfindung betrifft ein Verfahren zum Herstellen eines Solarpaneels umfassend die Schritte:
- Bereitstellen eines Solarmoduls;
- Bereitstellen eines Solarmoduls;
- Bereitstellen einer Anschlußdose umfassend:
   -- eine Deckelvorrichtung mit einem Verdrängerelement,
   -- eine Gehäusevorrichtung in einer Offenposition mit einem Funktionsinnenraum und
   -- ein Reservoir,
   wobei der Funktionsinnenraum hydraulisch mit dem Reservoir verbindbar ist;
- Ausfüllen des Funktionsinnenraums der Gehäusevorrichtung mit einem vorbestimmten Volumen Vp eines flüssigen Füllmaterials, wobei gilt: Vp≤Vₗ und Vₚ+Vᵥ≥Vₗ;
- Überführen der Deckelvorrichtung in eine Anordnungsposition, wobei in der Anordnungsposition der Deckelvorrichtung das Verdrängerelement der Deckelvorrichtung das Innenraumvolumen Vₗ des Funktionsinnenraums um ein vorbestimmtes Verdrängungsvolumen Vᵥ verkleinert;
- Aushärten des Füllmaterials.

Vorteilhafterweise wird ein Funktionsinnenraum, der mit einem variablen Volumen Vₚ eines Füllmaterials mit VₗV_{v≤}Vp_{≤}Vₗgefüllt ist, durch das Anordnen der Deckelvorrichtung weiter, insbesondere vollständig, mit dem Füllmaterial ausgefüllt. Weiter vorteilhafterweise kann durch eine entsprechende Wahl der Verdrängungsvolumens V_{P} des Verdrängungselementes die noch tolerierbare Variation in der Füllmenge mit Füllmaterial vorbestimmt werden.

Das Bereitstellen der Gehäusevorrichtung in der Offenposition kann das Anordnen bzw. Befestigen der Gehäusevorrichtung an einer Fläche des Solarmoduls umfassen, wobei insbesondere auch elektrische Kontakte der Anschlußdose mit zugeordneten elektrischen Leitern des Solarmodul kontaktiert werden können. Dazu umfaßt das Solarmodul zumindest zwei elektrische Leiter.

Vorzugsweise wird das Reservoir beim Überführen der Deckelvorrichtung von der Offenposition in die Anordnungsposition zumindest teilweise mit Füllmaterial aus dem Funktionsinnenraums der Gehäusevorrichtung gefüllt. Vorteilhafterweise gelangt kein Füllmaterial nach außerhalb der Anschlußdose, womit ein Verschmutzen durch Füllmaterial vermieden ist.

Vorzugsweise umfaßt das Verfahren den Schritt:
Verlagern von Kontaktelementen einer Kontaktvorrichtung der Anschlußdose von einer Initialposition in eine Kontaktposition, so daß die Kontaktelemente der Kontaktvorrichtung jeweils zugeordnete elektrische Leiter des Solarmoduls kontaktieren.

Vorzugsweise umfaßt das Verfahren die Schritte: Aktivieren eines Haftmittels an der Anschlußdose und/oder an dem Solarmodul und Anordnen der Gehäusevorrichtung an einer Fläche des Solarmoduls. Diese Schritte können bereits von dem Bereitstellen der Gehäusevorrichtung umfaßt sein oder getrennt ausgeführt werden.

Vorzugsweise umfaßt das Verfahren den Schritt: Aufrichten des Solarpaneels, so daß sich das Solarmodul mit einer Längserstreckung im wesentlichen entlang der Vertikalen erstreckt.

Vorteilhafterweise sind die Solarpaneele in einer aufgerichteten Position einfacher und platzsparender zu lagern oder weiter zu bearbeiten. Vorteilhafterweise wird das Füllmaterial innerhalb des Funktionsinnenraums durch das Aufrichten des Solarpaneels nicht zu einem Ort außerhalb des Funktionsinnenraums verlagert. Insbesondere wird mittels der Sperreinrichtung eine Verlagerung des Füllmaterials aus dem Funktionsinnenraum bzw. in das Reservoir beim Aufrichten des Solarpaneels gesperrt. Dadurch kann das Füllmaterial auch in einem aufgerichtetem Zustand des Solarpaneels aushärten, wobei der Funktionsinnenraum im wesentlichen vollständig mit Füllmaterial gefüllt bleibt, so daß vorteilhafterweise kein Aushärten in horizontaler Lagerung des Solarpaneels notwendig ist, welche einen erhöhten Platzbedarf bedingt. Weiter vorteilhafterweise sind die im Funktionsinnenraum angeordneten elektrischen Bauteile bevorzugt in dem Füllmaterial eingebettet, d.h. bevorzugt im wesentlichen vollständig von dem Füllmaterial umschlossen, so daß die elektrischen Bauteile von mechanischen und/oder chemischen Einflüssen geschützt sind.

### Deckelvorrichtuna

Ein dritter Aspekt der Erfindung betrifft eine Deckelvorrichtung für eine Anschlußdose gemäß erstem Aspekt der Erfindung umfassend:
- ein auf einer Anordnungsseite der Deckelvorrichtung angeordnetes Verdrängerelement und
- ein Reservoir,
wobei ein anordnungsseitiger Öffnungsbereich das Reservoir mit dem Äußeren der Deckelvorrichtung verbindet.

Als Anordnungsseite im Sinne der Erfindung wird die Seite der Deckelvorrichtung bezeichnet, die ausgelegt ist, in der Anordnungsposition an der Gehäusevorrichtung angeordnet zu sein. Mit anderen Worten umfaßt die Anordnungsseite in der Regel den Dichtbereich der Deckelvorrichtung.

Vorzugsweise ist das Verdrängerelement zumindest bereichsweise als Reservoir ausgebildet ist.

Vorzugsweise weist die Deckelvorrichtung eine Sperreinrichtung auf, durch welche die hydraulische Verbindung zwischen dem Reservoir und dem Äußeren verschließbar ist.

Vorzugsweise ist die Sperreinrichtung an dem Verdrängerelement angeordnet.

Vorzugsweise umfaßt die Deckelvorrichtung weiter:
einen anordnungsseitig an der Deckelvorrichtung angeordneten Dichtbereich, der ausgelegt ist, einen komplementären Dichtbereich zu kontaktieren, um den Funktionsinnenraum der zu verschließenden Gehäusevorrichtung in der Anordnungsposition der Anschlußdose vom Äußeren der Anschlußdose abzudichten.

Vorzugsweise ist das Verdrängerelement an einem Verdrängerelementanordnungsbereich der Deckelvorrichtung angeordnet, welcher von dem Dichtbereich umfangen ist.

### Verwerdung

Ein vierter Aspekt der Erfindung betrifft die Verwendung einer Deckelvorrichtung und einer Gehäusevorrichtung zum Ausbilden einer Anschlußdose gemäß dem ersten und dritten Aspekt der Erfindung, wobei die Deckelvorrichtung an der Gehäusevorrichtung angeordnet wird und wobei ein Verdrängerelement der Deckelvorrichtung in einen mit einem flüssigen Füllmaterial zumindest teilweise gefüllten Funktionsinnenraum der Gehäusevorrichtung hineinragt, um das Innenraumvolumen Vₗ des Funktionsinnenraums um ein Verdrängungsvolumen Vᵥ zu verkleinern.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1:: eine perspektivische Schnittansicht einer Ausführungsform eines Solarpaneels mit einer in Offenposition befindlichen Anschlußdose;
- Figur 2:: eine Schnittansicht der in Figur 1 gezeigten Ausführungsform;
- Figur 3:: eine Schnittansicht der in den Figuren 1 und 2 gezeigten Ausführungsform in einer Anordnungsposition;
- Figur 4:: eine Explosionsansicht der in den Figuren 1 bis 3 gezeigten Ausführungsform.

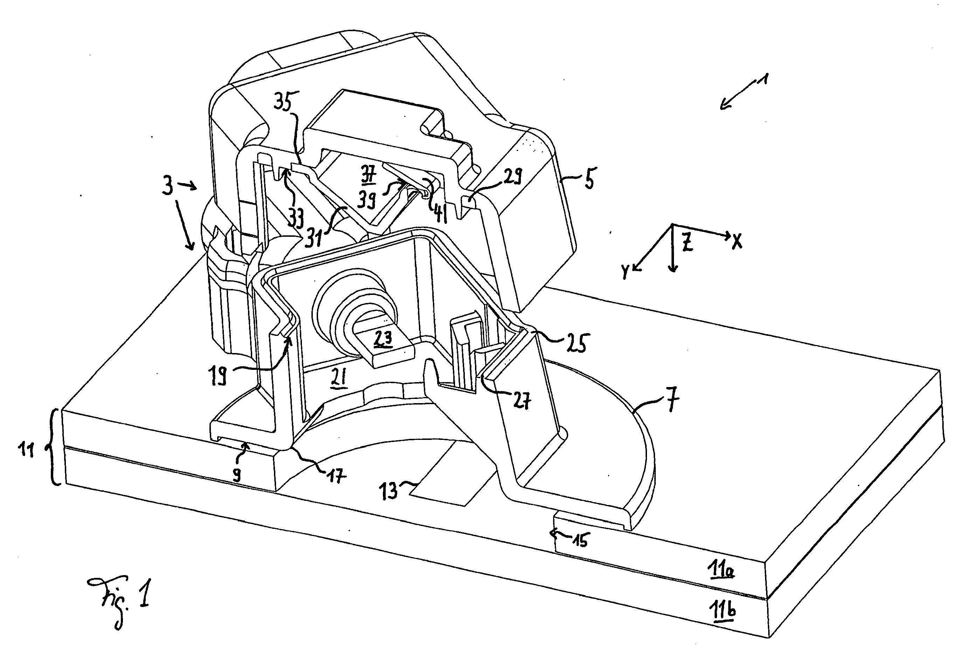

**Figur 1** zeigt eine perspektivische Schnittansicht einer Ausführungsform eines Solarpaneels 1 mit einer in einer Offenposition befindlichen Anschlußdose 3. Die Anschlußdose 3 umfaßt eine Deckelvorrichtung 5 sowie eine Gehäusevorrichtung 7. Die Gehäusevorrichtung 7 ist mit einer Anordnungsseite 9 an einem Solarmodul 11 angeordnet. Das plattenförmige Solarmodul 11 umfaßt in dieser Ausführungsform einen bestrahlungsseitigen Solarmodulkörper 11b sowie einen anschlußseitigen Solarmodulkörper 11 a, welcher auf der der Bestrahlungsseite gegenüberliegenden bzw. entgegengesetzten Seite angeordnet ist. Weiter umfaßt das Solarmodul 11 zumindest eine spannungserzeugende Solarzelle (nicht gezeigt), welche zwischen dem anschlußseitigen Solarmodulkörper 11a und dem bestrahlungsseitigen Solarmodulkörper 11 b angeordnet ist. Die von der Solarzelle erzeugte elektrische Leistung wird mittels zumindest zwei elektrischen Leitern 13 (in Fig. 1 ist nur ein elektrischer Leiter gezeigt), welche vorzugsweise die Form von Leiterbändern bzw. Ebenen elektrischen Kontakten aufweisen, an der Anschlußseite des Solarmoduls 11 bereitgestellt. Dazu weist der anschlußseitige Solarmodulkörper 11a in der Regel eine Ausnehmung 15 auf, welche einen Zugriff auf die elektrischen Leiter 13 ermöglicht. Es ist jedoch auch grundsätzlich möglich, die elektrischen Leiter 13 auf der Bestrahlungsseite des Solarmoduls 11 herauszuführen bzw. dort anzuordnen.

Die Gehäusevorrichtung 7 der Anschlußdose 3 ist mit ihrer Anordnungsseite 9 an der Anschlußseite des Solarmoduls 11 angeordnet bzw. daran befestigt. Die Anordnungsseite 9 ist an der dem Solarmodul 11 zugewandten Seite der Gehäusevorrichtung 7, das heißt "unten" angeordnet. Die dem Solarmodul 11 abgewandte Seite der Gehäusevorrichtung 7 kann dementsprechend als "oben" bezeichnet werden. Insbesondere ist durch das Solarmodul 11 ein Koordinatensystem definiert, wobei die ebene Fläche durch die Vektoren X und Y aufgespannt wird und der Vektor Z senkrecht zur X und Y, also senkrecht auf der durch das Solarmodul 11 aufgespannten Ebene steht. Der Vektor Z ist dabei von oben nach unten gerichtet, so daß eine Verlagerung entlang einer Verlagerungsrichtung Z bzw. des Vektors Z von oben nach unten führt.

Die Gehäusevorrichtung 7 der Anschlußdose 3 kontaktiert mit ihrer Anordnungsseite 9 zumindest bereichsweise das Solarmodul 11. Insbesondere sind sowohl die Anordnungsseite 9 der Gehäusevorrichtung 7 als auch die Anschlußseite des Solarmoduls 11 im wesentlichen eben ausgebildet, so daß die Anordnungsseite 9 im wesentlichen flächig und insbesondere vollständig an dem Solarmodul 11 anliegt. Weiter bevorzugt ist an der Anordnungsseite 9 ein Haftmittel (nicht gezeigt), insbesondere ein Klebemittel angeordnet, um die Gehäusevorrichtung 7 und damit die Anschlußdose 3 mittels des Haftmittels an dem Solarmodul 11 zu befestigen.

In der gezeigten Ausführungsform weist die Anordnungsseite 9 der Gehäusevorrichtung 7 einen Öffnungsbereich 17 auf, wobei die Gehäusevorrichtung 7 zweckmäßigerweise derart an dem Solarmodul 11 angeordnet ist, so daß sich der Öffnungsbereich 17 der Anordnungsseite 9 zumindest bereichsweise mit der Ausnehmung 15 des anschlußseitigen Solarmodulkörpers 11a überdeckt. Weiter umfaßt die Gehäusevorrichtung 7 in der gezeigten Ausführungsform eine Handhabungsöffnung 19, welche an der dem Öffnungsbereich 17 gegenüberliegenden bzw. entgegengesetzten Seite der Gehäusevorrichtung 7 ausgebildet ist. Über die Handhabungsöffnung 19 besteht Zugriff auf einen Funktionsinnenraum 21 der Gehäusevorrichtung 7, welcher ausgelegt ist, eine in der Regel zum Anschluß der Solarzelle des Sölarmoduls 11 notwendige Elektronik der Anschlußdose 3 aufzunehmen. Der Begriff "Funktionsinnenraum" beschreibt in diesem Zusammenhang ein Volumen, das von der Gehäusevorrichtung 7, der Deckelvorrichtung 5 sowie der Anordnungsseite 9 umgrenzt wird, wobei es nicht notwendig ist, daß der Funktionsinnenraum von einer geschlossenen Außenfläche umgrenzt ist. Beispielsweise kann die Deckelvorrichtung 5 nicht an der Handhabungsöffnung 19 angeordnet sein bzw. kann der Öffnungsbereich 17 der Anordnungsseite 9 nicht durch das Solarmodul 11 geschlossen sein, wobei der Begriff des Funktionsinnenraums das Innenvolumen der Gehäusevorrichtung 7 derart beschreibt, als ob der Öffnungsbereich 17 sowie die Handhabungsöffnung 19 verschlossen wären. Mit anderen Worten beschreibt der Begriff "Funktionsinnenraum" das Innenvolumen der Gehäusevorrichtung einer idealerweise vollständig geschlossenen Anschlußdose 3. Weiterhin kann zum Funktionsinnenraum 21 der Anschlußdose 3 auch dasjenige Volumen hinzugerechnet werden, welches durch die Gehäusevorrichtung 7, die Wandung der Ausnehmung 15 sowie den bestrahlungsseitigen Solarmodulkörper 11 b umschlossen wird.

Innerhalb des Funktionsinnenraums 21 der Gehäusevorrichtung 7 können die notwendigen elektronischen bzw. elektromechanischen Bauteile (nicht gezeigt) untergebracht sein, welche notwendig sind, die elektrischen Leiter 13 des Solarmoduls 11 mit einem zugeordneten Anschlußpol 23 zu verbinden. Bevorzugt sind alle notwendigen Bauteile, um die elektrischen Leiter 13 des Solarmoduls 11 mit einem zugeordneten Anschlußpol 23 zu verbinden, in dem Funktionsinnenraum 21 untergebracht. Die zum Kontaktieren notwendigen Maßnahmen bzw. Handlungen können über die Handhabungsöffnung 19 durchgeführt werden. Die Handhabungsöffnung 19 ist von einem den Rand der Handhabungsöffnung 19 umlaufenden, komplementären Dichtbereich 25 umgeben. Der komplementäre Dichtbereich 25 ist in der gezeigten Ausführungsform als im wesentlichen ebener Bereich ausgebildet, welcher einen die Handhabungsöffnung 19 umlaufenden Vorsprung bzw. Nase 27 aufweist, welcher bzw. welche ausgelegt ist, mit einem Dichtbereich 29 der Deckeivorrichtung 5 zu kontaktieren.

In der Figur 1 ist die Deckelvorrichtung 5 in der Offenposition gezeigt, wobei die Deckelvorrichtung 5 entlang der Verlagerungsrichtung Z bzw. entlang dem Vektor Z verlagert werden kann, um von der Offenposition in eine Anordnungsposition überführt zu werden. Die Deckelvorrichtung 5 weist einen Dichtbereich 29 auf, welcher im wesentlichen komplementär bzw. kongruent zu dem komplementären Dichtbereich 25 der Gehäusevorrichtung 7 ausgebildet ist, so daß der Dichtbereich 29 mit dem komplementären Dichtbereich 25 in Formschluß gelangen kann.

Die Deckelvorrichtung 5 umfaßt weiter ein Verdrängerelement 31, welches an der Anordnungsseite 33 der Deckelvorrichtung 5, also der der Gehäusevorrichtung 7 zugewandten Seite der Deckelvorrichtung 5, angeordnet ist. Das Verdrängerelement 31 ist an einem Verdrängerelementanordnungsbereich 35 der Deckelvorrichtung 5 angeordnet bzw. befestigt, wobei der Verdrängerelementanordnungsbereich 35 in dem Bereich der Anordnungsseite 33 der Deckelvorrichtung 5 ausgebildet ist, welcher von dem Dichtbereich 29 umfaßt bzw. umfangen wird. Mit anderen Worten befindet sich das Verdrängerelement 31 sowie der Verdrängerelementanordnungsbereich 35 in einer Draufsicht auf die Anordnungsseite 33 der Deckelvorrichtung 5 mit Blickrichtung entgegen der Verlagerungsrichtung Z innerhalb des Dichtbereichs 29 der Deckelvorrichtung 5.

Das Verdrängerelement 31 umfaßt in der gezeigten Ausführungsform ein Reservoir 37 mit einem Öffnungsbereich 39, wobei der Öffnungsbereich 39 mittels einer Sperreinrichtung 41 verschließbar ist. Das Reservoir kann auch Bestandteil der Gehäusevorrichtung 7 sein. Der Öffnungsbereich 39 und die Sperreinrichtung 41 sind ausgelegt, daß eine hochviskose Flüssigkeit, d.h. ein zähflüssiges Material, den Öffnungsbereich 39 im wesentlichen ungehindert durchströmen kann, wenn die Sperreinrichtung geöffnet ist. Mit anderen Worten ist das Reservoir 37 über den Öffnungsbereich 39 mit dem Äußeren verbunden, wenn die Sperreinrichtung geöffnet ist. Dagegen ist das Reservoir 37 hydraulisch von dem äußeren getrennt, wenn die Sperreinrichtung 41 den Öffnungsbereich 39 verschließt. Eine hydraulische Trennung für hochviskose Flüssigkeiten hat nicht zwingend zur Folge, daß das Reservoir 37 gasdicht und/oder wasserdicht von dem Äußeren abgeschlossen ist. Vielmehr kann es für eine hydraulische Trennung des Reservoirs 37 von dem Äußeren ausreichend sein, wenn Flüssigkeiten mit einer Viskosität größer als etwa 0,5 Nsm⁻² (entspricht 5 Poise), vorzugsweise größer als etwa 1 Nsm⁻² (10 Poise), weiter vorzugsweise größer als etwa 30 Nsm⁻² (100 Poise), bevorzugt größer als etwa 10 Nsm⁻² (100 Poise), insbesondere größer als 100 Nsm⁻² (1000 Poise), gehindert sind, den Öffnungsbereich 39 zu passieren. Diese hochviskosen Flüssigkeiten können insbesondere aus einem Duroplastvorprodukt oder einem Thermoplastvorprodukt bestehen, also einem flüssigen Kunststoff bzw. dessen Vorprodukt.

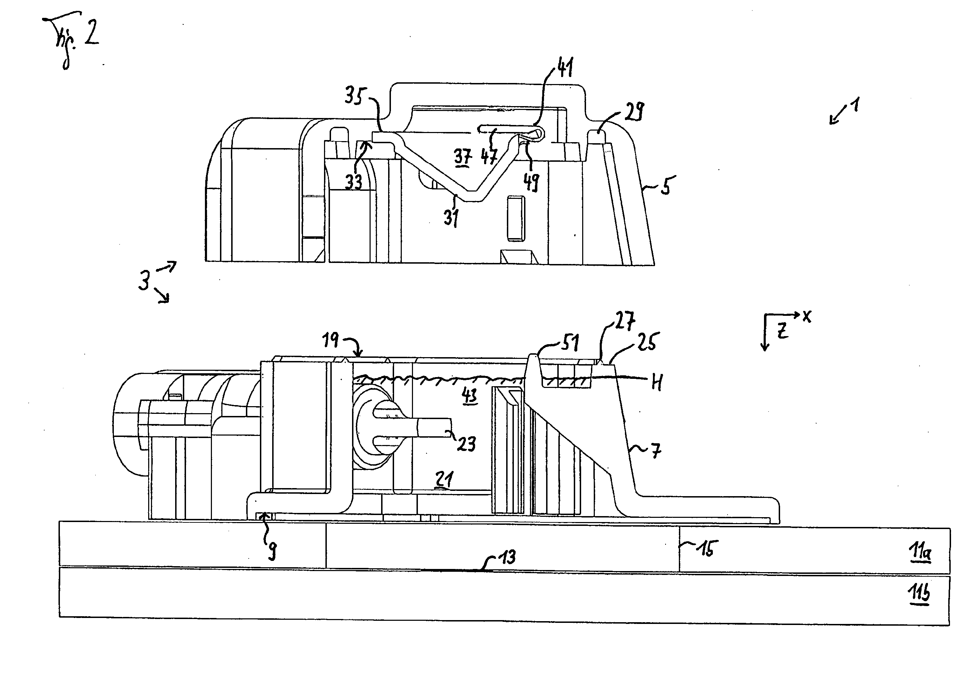

**Figur 2** zeigt eine Schnittansicht der in Figur 1 gezeigten Ausführungsform eines Solarmoduls 11 mit daran angeordneter Gehäusevorrichtung 7 und einer in Offenposition befindlichen Deckelvorrichtung 5. Das Innenraumvolumen Vₗ des Funktionsinnenraums 21, welcher durch die Wandung der Gehäusevorrichtung 7 sowie durch die Wandung der Ausnehmung 15 und den bestrahlungsseitigen Solarmodulkörper 11 b begrenzt wird, ist nach dem elektrischen Kontaktieren des Anschlußpols 23 mit dem gezeigten zugeordneten elektrischen Leiter des Solarmoduls 13 mit einem Füllmaterial 43 teilweise gefüllt worden. Dieses Füllmaterial 43 besteht beispielsweise aus einem Kunstharz, welches die elektronischen Bauteile, die sich innerhalb des Funktionsinnenraums 21 befinden, vor äußeren Einflüssen wie beispielsweise Korrosion und mechanische Beanspruchung schützen soll. Die Viskosität des Kunstharzes beim Einfüllen in den Funktionsinnenraum ist bevorzugt größer als etwa 0,5 Nsm⁻² (entspricht 5 Poise), vorzugsweise größer als etwa 1 Nsm⁻² (10 Poise), weiter vorzugsweise größer als etwa 30 Nsm⁻² (100 Poise), bevorzugt größer als etwa 10 Nsm⁻² (100 Poise), insbesondere größer als 100 Nsm⁻² (1000 Poise). Da der anschlußseitige Solarmodulkörper 11 a unterschiedliche Dicken aufweisen kann, kann auch das Volumen der Ausnehmung 15 je nach dem mit Anschlußdosen 3 zu bestückenden Solarmodul 11 erheblichen Schwankungen unterliegen. Weiterhin kann das Innenraumvolumen Vₗ des Funktionsinnenraums 21 aufgrund von fertigungsbedingten Toleranzen bei der Herstellung der Gehäusevorrichtung 7 sowie bei fertigungstechnischen Toleranzen bezüglich der Positionierung der Gehäusevorrichtung 7 relativ zur Ausnehmung 15 gewissen Schwankungen unterliegen. Folglich kann die Füllstandshöhe H des Füllmaterials 43 relativ zur Höhe der Handhabungsöffnung 19 der Gehäusevorrichtung von Solarmodul 11 zu Solarmodul unterschiedlich sein.

Da das Innenraumvolumen Vₗ vor Befüllung des Funktionsinnenraums 21 mit Füllmaterial 43 aufgrund der komplizierten Geometrie des Funktionsinnenraumes 21 vorher nicht bestimmt werden kann und Vorrichtungen zur automatischen Befüllung in der Regel ausgelegt sind, ein konstantes Volumen an Füllmaterial 43 einzufüllen, kann in Abhängigkeit vom Innenraumvolumen Vₗ mehr oder weniger Füllmaterial 43 über den Rand der Handhabungsöffnung 19 übertreten oder ein nicht mit Füllmaterial 43 ausgefüllter Hohlraum innerhalb der Gehäusevorrichtung 7 entstehen. Insbesondere das Heraustreten von Füllmaterial 43 aus der Gehäusevorrichtung 7 ist unerwünscht. Daher wird in der Regel ein Volumen an Füllmaterial 43 in den Funktionsinnenraum 21 gefüllt, welches derart bemessen ist, daß es den unter Berücksichtigung aller Toleranzen zu erwartenden minimalen Innenraumvolumen Vₗ nicht überschreitet. In diesem Fall verbleibt immer ein Abstand zwischen der Oberkante des Füllmaterials 43 und dem Rand der Handhabungsöffnung 19 der Gehäusevorrichtung 7. Nachdem Einfüllen des Füllmaterials 43 in den Funktionsinnenraum 21 der Gehäusevorrichtung 7 wird die Deckelvorrichtung 5 in die Anordnungsposition überführt, solange das Füllmaterial 43 noch in einem flüssigen, das heißt nicht ausgehärtetem Zustand befindet.

Die in der Figur 2 gezeigte Verschlußklappe 47, die durch das Gelenk 49 mit dem Verdrängerelement 31 gelenkig verbunden ist, entspricht der in Figur 1 gezeigten Verschlußklappe 47.

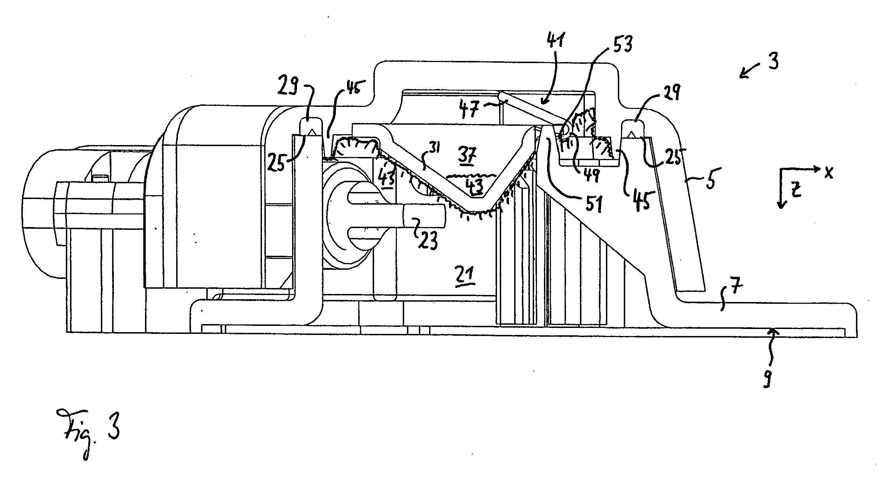

**Figur 3** zeigt eine Schnittansicht der in den Figuren 1 und 2 gezeigten Ausführungsformen in der Anordnungsposition. Während des Überführens der Deckelvorrichtung 5 von der Offenposition in die Anordnungsposition taucht das Verdrängerelement 31 zumindest bereichsweise in das Füllmaterial 43 ein. Durch die Verdrängung des Füllmaterials 43 im Funktionsinnenraum 21 der Gehäusevorrichtung 7 steigt die Füllhöhe A des Füllmaterials 43. Um ein Austreten des Füllmaterials 43 über den Rand der Handhabungsöffnung 19 der Gehäusevorrichtung 7 zu verhindern, weist der Dichtbereich 29 der Deckelvorrichtung 5 eine Dichtrippe 45 auf, welche den komplementären Dichtbereich 25 dichtend kontaktiert, bevor das Füllmaterial 43 den Rand der Handhabungsöffnung 19 erreicht. Mit anderen Worten ist die Geometrie der Deckelvorrichtung 5 derart ausgelegt, daß das Verdrängungsvolumen des Verdrängerelements 31, welches unterhalb der Unterkante der Dichtrippe 45 des Dichtbereichs 29 angeordnet ist, kleiner ist als das verbleibende Volumen des Funktionsinnenraums 21 der Gehäusevorrichtung 7, welches nicht mit Füllmaterial 43 gefüllt ist.

Alternativ kann das Volumen des Füllmaterials 43, welches in den Funktionsinnenraum 21 eingefüllt wird, derart bemessen sein, daß die Differenz zwischen dem Innenraumvolumen Vₗ des Funktionsinnenraums 21 und dem Volumen des eingefüllten Füllmaterials 43 größer ist als das anteilige Volumen des Verdrängerelements 31, welches unterhalb der Dichtrippe 45 des Dichtbereichs 29 entspricht. Sobald die Dichtrippe 45 des Dichtbereichs 29 der Deckelvorrichtung 5 die Gehäusevorrichtung 7 in dem komplementären Dichtbereich 25 kontaktiert, ist der Funktionsinnenraum hydraulisch lediglich mit dem Reservoir 37 verbunden. Dadurch wird das Füllmaterial 43, welches beim weiteren Eintauchen des Verdrängerelements 31 aus dem Funktionsinnenraum 21 verdrängt wird, in das Reservoir 37 der Deckelvorrichtung 5 fließen bis die Deckelvorrichtung 5 die Anordnungsposition erreicht hat.

Das nach dem Anordnen der Deckelvorrichtung 5 an die Gehäusevorrichtung 7 in der Anschlußdose 3 befindliche Füllmaterial 43 härtet nun - abhängig vom Füllmaterial - innerhalb der nächsten Minuten oder Stunden aus. Die beim Aushärten entstehenden Gase können vorzugsweise in einem verbleibenden Volumen des Reservoirs 37 gesammelt werden. Weiter vorzugsweise ist der Dichtbereich 29 und der komplementäre Dichtbereich 25 derart ausgebildet, daß die Abdichtung in der Anordnungsposition nicht gasdicht ist, sondern lediglich dicht gegenüber Flüssigkeiten, insbesondere hochviskosen Flüssigkeiten mit einer Viskosität von größer als 0,5 Nsm⁻².

Um den Herstellungsprozess des Solarpaneels 1 nach dem Schließen der Anschlußdose 3 weiter fortführen zu können, ist es in der Regel notwendig, das Solarpaneel in die Vertikale zu kippen. Um dabei eine weitere Verlagerung von noch nicht ausgehärtetem Füllmaterial 43 zu verhindern, damit der Funktionsinnenraum 21 vollständig mit Füllmaterial gefüllt bleibt, weist die Anschlußdose 3 bevorzugt eine Sperreinrichtung 41 auf, welche die hydraulische Verbindung des Funktionsinnenraums 21 mit dem Reservoir 37 sperrt, so daß das Füllmaterial 43 im Funktionsinnenraum 21 verbleibt. In der gezeigten Ausführungsform ist die Sperreinrichtung 41 an dem Verdrängerelement 31 angeordnet. Die Sperreinrichtung 41 umfaßt eine Verschlußklappe 47 sowie ein Gelenk 49, welches die Verschlußklappe 47 mit dem Verdrängerelement 31 gelenkig verbindet. Vorzugsweise sind das Verdrängerelement 31 die Verschlußklappe 47 sowie das Gelenk 49 einstückig aus einem rückstellfähigen Kunststoff hergestellt. Insbesondere ist das Gelenk 49 als Festkörpergelenk aus einem rückstellfähigen oder elastisch oder plastisch verformbaren Kunststoff ausgebildet.

Um die Verschlußklappe 47 der Sperreinrichtung 41 in der Anordnungsposition der Anschlußdose 3 dauerhaft zu verschließen umfaßt die Gehäusevorrichtung 7 ein Aktuationselement 51 für die Sperreinrichtung 41. Das Aktuationselement 51 der Gehäusevorrichtung 7 umfaßt einen Vorsprung bzw. einen Stempel, welcher sich entgegen der Verlagerungsrichtung Z erstreckt. Während die Deckelvorrichtung 5 von der Offenposition entlang der Verlagerungsrichtung Z in die Anordnungsposition überführt wird, tritt das Aktuationselement 51 durch eine Durchtrittsöffnung 53 des Gelenkes 49 hindurch um die Verschlußklappe 47 mechanisch zu kontaktieren. Bevor die Deckelvorrichtung 5 die Anordnungsposition erreicht, übt das Aktuationselement 51 eine gegen die Verlagerungsrichtung Z wirkende Kraft auf die Verschlußklappe 47 der Sperreinrichtung 41 aus, so daß diese verschwenkt, um den Öffnungsbereich 39 des Reservoirs 37 zu verschließen. Somit ist das Reservoir 37 in der Anordnungsposition der Anschlußdose 3 hydraulisch von dem Funktionsinnenraum 21 getrennt. Die verbleibenden Öffnungen, beispielsweise im Bereich der Durchtrittsöffnung 53, sind für hochviskose Flüssigkeiten mit einer Viskosität von größer als 0,5 Nsm⁻² bzw. größer als 1 Nsm-², vorzugsweise größer als 10 Nsm-², nicht durchlässig. Somit können vorteilhafterweise die beim Aushärten des Füllmaterials 43 entstehenden Gase aus dem Funktionsinnenraum 21 in das Reservoir 37 übertreten. Nach der vollständigen Aushärtung des Füllmaterials 43 ist die Deckelvorrichtung 5 dauerhaft mit der Gehäusevorrichtung 7 verbunden. Alternativ kann das Aktuationselement 51 der Gehäusevorrichtung 7 ausgebildet sein, beispielsweise als Stempel bzw. Stopfen, um die hydraulische Verbindung zwischen dem Reservoir 37 und dem Funktionsinnenraum 21 zu verschließen. Insbesondere, wenn die hydraulische Verbindung als Öffnung in der Wandung der Verdrängerelementes 31 ausgebildet ist, kann das Aktuationselement 51 diese Öffnung in der Anordnungsposition verschließen.

Die weiteren in der Figur gezeigten Merkmale sind identisch mit den in den Figuren 1 und 2 gezeigten Merkmalen und deshalb mit identischen Bezugsziffern bezeichnet.

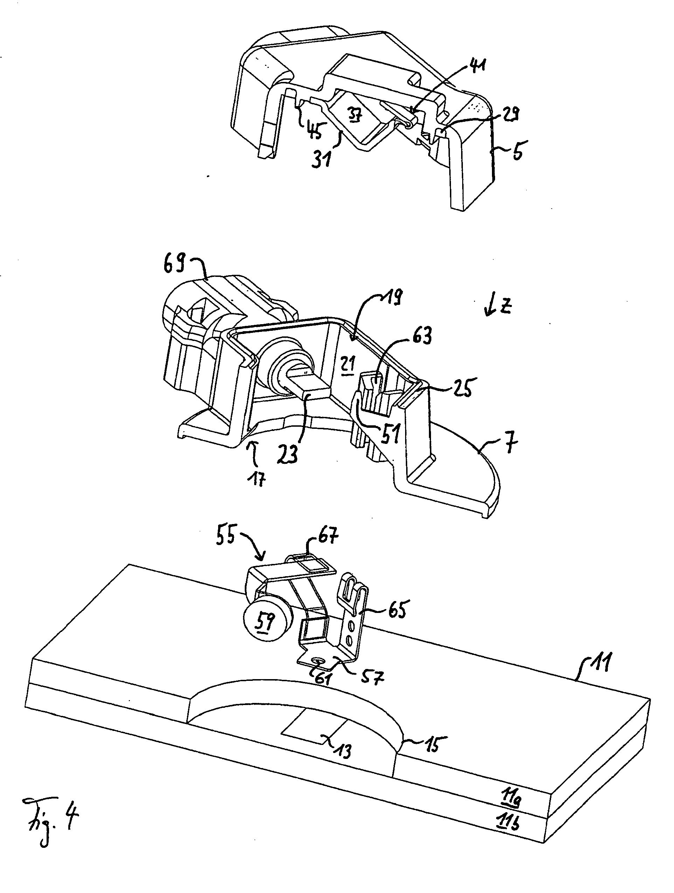

**Figur 4** zeigt eine Explosionsansicht der in den Figuren 1 bis 3 gezeigten Ausführungsformen. Alle im folgenden nicht beschriebenen Merkmale, welche in Figur 4 gezeigt sind, sind identisch mit den in den Figuren 1 bis 3 gezeigten Merkmalen und daher mit denselben Bezugsziffern bezeichnet.

Die in der Figur 4 gewählte Schnittebene entspricht einer Spiegelsymmetrieebene der Anschlußdose 3, wobei korrespondierende Bauelemente der gezeigten Ausführungsform spiegelsymmetrisch zu der Schnittebene angeordnet, aber nicht dargestellt sind.

Figur 4 zeigt ein Solarmodul 11 mit einer Ausnehmung 15, in welcher zumindest zwei elektrische Leiter 13 des Solarmoduls 11 angeordnet sind, wobei die zumindest zwei elektrischen Leiter 13 mit zumindest einer Solarzelle (nicht gezeigt) des Solarmoduls 11 elektrisch verbunden sind, um die durch die Solarzelle erzeugte elektrische Leistung bereitzustellen. Weiter zeigt Figur 4 die Anschlußdose 3 mit der Deckelvorrichtung 5 und der Gehäusevorrichtung 7, wobei die Anschlußdose 3 ausgelegt ist an dem Solarmodul 11 angeordnet bzw. befestigt zu sein. Der durch die Gehäusevorrichtung 7 umgrenzte Funktionsinnenraum 21 nimmt zumindest bereichsweise eine Kontaktvorrichtung 55 auf. Die Kontaktvorrichtung 55 der gezeigten Ausführungsform umfaßt zwei Kontaktelemente 57 (in Figur 1 ist nur ein Kontaktelement gezeigt) und eine Diode 59, welche die zwei Kontaktelemente 57 elektrisch kontaktiert. Es versteht sich, daß die Kontaktvorrichtung 55 auch 3, 4 oder mehr Kontaktelemente 57 umfassen kann, wobei diese Kontaktelemente durch zwei oder mehr Dioden 59 miteinander elektrisch kontaktiert sein können.

Die Kontaktelemente 57 der Kontaktvorrichtung 55 sind im Funktionsinnenraum 21 der Gehäusevorrichtung 7 verlagerbar angeordnet, wobei die Kontaktelemente 57 von einer Initialposition in eine Kontaktposition verlagert werden können. Dabei sind die Kontaktelemente 57 der Kontaktvorrichtung 55 entlang einer Verlagerungsrichtung im wesentlichen linear verlagerbar. Beispielsweise kann die Verlagerungsrichtung senkrecht auf der Anordnungsseite 9 der Gehäusevorrichtung 7 stehen. Mit anderen Worten können die Kontaktelemente 57 ausgehend von der Initialposition entlang der Verlagerungsrichtung Z zu dem Solarmodul 11 hin verlagert werden, wenn die Gehäusevorrichtung 7 mit der Anordnungsseite 9 an dem Solarmodul 11 angeordnet bzw. befestigt ist. Die Gehäusevorrichtung 7 weist dabei im Bereich der Kontaktvorrichtung 55 einen Öffnungsbereich 17 der Anordnungsseite 9 zur Durchführung der Kontaktelemente 57 auf. Ausgehend von der Initialposition werden die Kontaktelemente 57 durch den Öffnungsbereich 17 hindurch geführt bzw. hindurch verlagert, um die Kontaktposition zu erreichen. In der Kontaktposition sind die Kontaktelemente jeweils mit einem zugeordneten elektrischen Leiter 13 des Solarmoduls 11 kontaktiert, insbesondere elektrisch kontaktiert. Die Kontaktelemente 57 können an den zugeordneten elektrischen Leitern 13 des Solarmoduls 11 in der Kontaktposition beispielsweise durch Verlöten, durch Festklemmen, Verschrauben, Vernieten, Verkleben, Anpressen oder dergleichen befestigt werden, so daß ein elektrischer Kontakt zwischen den elektrischen Leitern 13 des Solarmoduls 11 mit den zugeordneten Kontaktelementen 57 der Kontaktvorrichtung 55 ausgebildet ist. Bevorzugt jedoch werden die Kontaktelemente 57 mit den zugeordneten elektrischen Leitern 13 verlötet, wobei die Kontaktelemente 47 weiter bevorzugt jeweils eine durchgehende Ausnehmung aufweisen, so daß ein Lötmittel durch eine durchgängige Ausnehmung 61 auf jeweils einen zugeordneten elektrischen Leiter 13 aufgebracht werden kann, um nach dem Abkühlen des Lötmittels die Kontaktelemente 57 dem jeweiligen zugeordneten elektrischen Leiter 13 elektrisch zu kontaktieren und mechanisch zu fixieren

Um die im wesentlichen lineare Verlagerung der Kontaktelemente 57 entlang der Verlagerungsrichtung Z zu führen, umfaßt die Gehäusevorrichtung 7 innerhalb des Funktionsinnenraums 21 in der gezeigten Ausführungsform zwei Führungselemente 63, welche in der gezeigten Ausführungsform als Führungsschiene bzw. Führungsnut 63 ausgebildet sind. Dementsprechend weist die Kontaktvorrichtung 55 komplementäre Führungselemente 65 auf, die ausgelegt sind mit einem zugeordneten Führungselement 63 der Gehäusevorrichtung 7 in Eingriff zu sein, so daß eine Verlagerung der Kontaktelemente 57 entlang der Verlagerungsrichtung Z möglich ist, während eine Verlagerung der Kontaktelemente 57 entlang einer Verschiebungsrichtung, die im wesentlichen senkrecht zur Verlagerungsrichtung Z feststeht, gehemmt ist. Dementsprechend ist das Führungselement 63 als Führungsnut bzw. Führungsschiene ausgebildet, wobei die Längserstreckung der Führungsnut bzw. Führungsschiene parallel zur Verlagerungsrichtung Z ist.

Die Diode 59 der Kontaktvorrichtung 55, welche die Kontaktelemente 57 miteinander elektrisch kontaktiert, ist vorzugsweise derart mit den Kontaktelementen 57 mechanisch verbunden, insbesondere durch Verlöten, Verschweißen, Kleben und/oder Crimpen, daß sich die relative Position der Kontaktelemente 57 zur Diode 59 im wesentlichen nicht verändert. Mit anderen Worten wird die Diode 59 ebenfalls entlang der Verlagerungsrichtung Z verlagert, wenn die Kontaktelemente 57 von der Initialposition in die Kontaktposition überführt werden. Mit anderen Worten sind die Kontaktelemente 57 mit der Diode, und insbesondere mittels der Diode 59, starr mechanisch verbunden, wodurch die Diode 59 ebenfalls entlang der Verlagerungsrichtung z verlagerbar in der Gehäusevorrichtung angeordnet ist. Es versteht sich, daß die Diode 59 ebenfalls starr in der Gehäusevorrichtung 7 angeordnet bzw. befestigt sein kann, so daß die Diode 59 nicht verlagert wird, wenn die Kontaktelemente 57 von der Initialposition in die Kontaktposition überführt werden.

Die Kontaktvorrichtung 55 umfaßt weiter zwei Anschlußelemente 67, welche in der Kontaktposition jeweils mit einem zugeordneten Anschlußpol elektrisch kontaktiert sind. In der gezeigten Ausführungsform ist der Anschlußpol 23 als elektrischer Kontakt eines in der Gehäusevorrichtung ausgebildeten Verbinders 69 ausgebildet. Bevorzugt ist der Verbinder 69 mit der Gehäusevorrichtung 7 integral bzw. einstückig ausgebildet. Es versteht sich, daß der Anschlußpol 23 ebenfalls als Anschlußleiter bzw. als Leitungsader eines elektrischen Kabels ausgebildet sind kann, welches mit der Gehäusevorrichtung 7 verbunden ist.

Durch die Verlagerbarkeit der Kontaktelemente 57 kann die gezeigte Anschlußdose 3 mit einer Vielzahl von unterschiedlichen Solarmodulen 11 kontaktiert werden, wobei die Solarmodule 11 auf der Anschlußseite angeordnete oder in der Ausnehmung 15 versenkt angeordnete elektrische Leiter 13 aufweisen können. Die unterschiedlich ausgebildeten Solarmodule 11 können daher unterschiedliche Versenktiefen der elektrischen Leiter 13 aufweisen, was zu einem variablen Innenraumvolumen Vₗ des Funktionsinnenraums 21 führt. Weiter kann eine Variation des Innenraumvolumens Vₗ dadurch bedingt sein, daß im Laufe der Produktion verschiedene Dioden 59 mit unterschiedlichen Verdrängungsvolumen verwendet werden. Durch Verwendung der gezeigten Anschlußdose 3 ist es dennoch nicht notwendig, daß Volumen des Füllmaterials, mit welchem der Funktionsinnenraum 21 der Anschlußdose nach dem Anordnen bzw. Befestigen der Gehäusevorrichtung 7 an dem Solarmodul 11 und dem Kontaktieren der Kontaktelemente 57 mit den zugeordneten elektrischen Leitern 13 gefüllt wird zu verändern. Die möglicherweise auftretenden Variationen in der Füllstandshöhe H des Füllmaterials 43 innerhalb der Gehäusevorrichtung 7 wird durch Anordnen der Deckelvorrichtung 5 ausgeglichen, da das Verdrängerelement 31 in das Füllmaterial 43 eintaucht, wobei das Füllmaterial 43 aus dem Funktionsinnenraum 21 der Gehäusevorrichtung 7 verdrängt wird und in das Reservoir 37 der Deckelvorrichtung 5 fließt. Nachdem die Deckelvorrichtung 5 in die Anordnungsposition überführt ist, d.h. wenn die Gehäusevorrichtung 7 durch die Deckelvorrichtung 5 vollständig geschlossen ist, wird die hydraulische Verbindung zwischen dem Funktionsinnenraum 21 der Gehäusevorrichtung und dem Reservoir 37 der Deckelvorrichtung 5 durch die Sperreinrichtung 41 geschlossen. Dazu betätigt das Aktuationselement 51 die Verschlußklappe 47 der Sperreinrichtung 41, wenn die Deckelvorrichtung 5 in der Anordnungsposition ist. Somit kann kein weiteres Füllmaterial 43 aus dem Funktionsinnenraum 21 der Gehäusevorrichtung 7 austreten. Das Füllmaterial 43 härtet im folgenden aus, wobei die Deckelvorrichtung 5 an der Gehäusevorrichtung 7 fixiert wird und die Position der Kontaktvorrichtung 55 innerhalb des Funktionsinnenraums 21 fixiert wird. Weiter vorteilhafterweise bewirkt das ausgehärtete Füllmaterial 43, daß die Kontaktvorrichtung 55, insbesondere die Kontaktelemente 57 sowie die elektrischen Leiter 13 des Solarmoduls 11, feuchtigkeitsdicht eingeschlossen sind, wodurch vorteilhafterweise eine Korrosion dieser Bauteile verhindert wird.

### Bezugszeichenliste

- 1: Solarpaneel
- 3: Anschlußdose
- 5: Deckelvorrichtung
- 7: Gehäusevorrichtung
- 9: Anordnungsseite der Gehäusevorrichtung 7
- 11: Solarmodul
- 11a: anschlußseitiger Solarmodulkörper
- 11b: bestrahlungsseitiger Solarmodulkörper
- 13: elektrischer Leiter des Solarmoduls 11
- 15: Ausnehmung in dem anschlußseitigem Solarmodulkörper 11a
- 17: Öffnungsbereich der Anordnungsseite 9 der Gehäusevorrichtung 7
- 19: Handhabungsöffnung der Gehäusevorrichtung 7
- 21: Funktionsinnenraum
- 23: Anschtußpol
- 25: komplementärer Dichtbereich
- 27: Vorsprung, Nase
- 29: Dichtbereich der Deckelvorrichtung 5
- 31: Verdrängerelement
- 33: Anordnungsseite der Deckelvorrichtung 5
- 35: Verdrängerelementanordnungsbereich
- 37: Reservoir
- 39: Öffnungsbereich des Reservoirs 37
- 41: Sperreinrichtung
- 43: Füllmaterial
- 45: Dichtrippe des Dichtbereichs 29
- 47: Verschlußklappe
- 49: Gelenk
- 51: Aktuationselement für die Sperreinrichtung 41
- 53: Durchtrittsöffnung
- 55: Kontaktvorrichtung
- 57: Kontaktelement
- 59: Diode
- 61: Ausnehmung des Kontaktelements 57
- 63: Führungselement
- 65: komplementäres Führungselement der Kontaktvorrichtung 55
- 67: Anschlußelement der Kontaktvorrichtung 55
- 69: Verbinder
- H: Füllstandshöhe des Füllmaterials 43
- Vₗ: Innenraumvolumen des Funktionsinnenraums 21
- Vᵥ: Verdrängungsvolumen
- Vp: Volumen des Füllmaterials
- Z: Verlagerungsrichtung der Kontaktelemente 57

## Patentansprüche

1. Anschlußdose (3), insbesondere für Solarmodule (11), umfassend:
- eine Gehäusevorrichtung (7) mit einem Funktionsinnenraum (21) **gekennzeichnet durch**
- eine Deckelvorrichtung (5) mit einem Verdrängerelement (31), und
- ein Reservoir (37),
wobei der Funktionsinnenraum (21) hydraulisch mit dem Reservoir (37) verbindbar ist und
wobei in einer Anordnungsposition das Verdrängerelement (31) das Innenraumvolumen V_{I} des Funktionsinnenraums (21) um ein vorbestimmtes Verdrängungsvolumen V_{V} verkleinert.

2. Anschlußdose (3) nach Anspruch 1, wobei das Reservoir (37) Bestandteil der Deckelvorrichtung (5) ist.

3. Anschlußdose (3) nach Anspruch 1 oder 2, wobei ein im Funktionsinnenraum (21) befindliches Fluid, insbesondere ein Füllmaterial (43), durch das Verdrängerelement (31) aus dem Funktionsinnenraum (21) verdrängbar und zumindest teilweise in das Reservoir (37) überführbar ist.

4. Anschlußdose (3) nach einem der vorigen Ansprüche, wobei das vorbestimmte Verdrängungsvolumen V_{V} größer ist als 5 Prozent des Innenraumvolumens V_{I} und/oder wobei das Volumen V_{R} des Reservoirs (37) größer oder gleich dem Verdrängungsvolumen Vv ist.

5. Anschlußdose (3) nach einem der vorigen Ansprüche, wobei das Verdrängerelement (31) zumindest bereichsweise als Reservoir (37) ausgebildet ist.

6. Anschlußdose (3) nach einem der vorigen Ansprüche, wobei die Anschlußdose (3) eine Sperreinrichtung (41) aufweist, durch welche eine hydraulische Verbindung zwischen dem Funktionsinnenraum (21) und dem Reservoir (37) sperrbar ist, wobei die Sperreinrichtung (41) bevorzugt an dem Verdrängerelement (31) angeordnet ist.

7. Anschlußdose (3) nach Anspruch 6, mit einem Aktuationselement (51), welches die Sperreinrichtung (41) in der Anordnungsposition aktuiert, um die hydraulische Verbindung zu verschließen.

8. Anschlußdose (3) nach einem der vorigen Ansprüche, weiter umfassend:
- einen an der Deckelvorrichtung (5) angeordneten Dichtbereich (29);
- einen an der Gehäusevorrichtung (7) angeordneten komplementären Dichtbereich (25),
wobei in der Anordnungsposition der Deckelvorrichtung (5) der Dichtbereich (29) den komplementären Dichtbereich (25) kontaktiert, um den Funktionsinnenraum (21) vom Äußeren der Anschlußdose (3) abzudichten, wobei das Verdrängerelement (31) bevorzugt an einem Verdrängerelementanordnungsbereich (35) der Deckelvorrichtung (5) angeordnet ist, welcher von dem Dichtbereich (29) umfangen ist.

9. Verfahren zum Herstellen eines Solarpaneels (1) mit den Schritten:
- Bereitstellen eines Solarmoduls (11)
**gekennzeichnet durch** die Schritte:
- Bereitstellen einer Anschlußdose (3) umfassend:
-- eine Deckelvorrichtung (5) mit einem Verdrängerelement (31),
-- eine Gehäusevorrichtung (7) in einer Offenposition mit einem Funktionsinnenraum (21) und
-- ein Reservoir (37),
wobei der Funktionsinnenraum (21) hydraulisch mit dem Reservoir (37) verbindbar ist;
- Ausfüllen des Funktionsinnenraums (21) der Gehäusevorrichtung (7) mit einem vorbestimmten Volumen V_{P} eines flüssigen Füllmaterials, wobei gilt: V_{P} ≤ V_{I} und V_{P}+V_{V}≥V_{I};
- Überführen der Deckelvorrichtung (5) in eine Anordnungsposition, wobei in der Anordnungsposition der Deckelvorrichtung (5) das Verdrängerelement (31) der Deckelvorrichtung (5) das Innenraumvolumen V_{I} des Funktionsinnenraums (21) um ein vorbestimmtes Verdrängungsvolumen V_{V} verkleinert;
- Aushärten des Füllmaterials.

10. Verfahren nach Anspruch 9, wobei das Reservoir (37) beim Überführen der Deckelvorrichtung (5) von der Offenposition in die Anordnungsposition zumindest teilweise mit Füllmaterial aus dem Funktionsinnenraums (21) der Gehäusevorrichtung (7) gefüllt wird.

11. Verfahren nach einem der Ansprüche 9 oder 10, weiter umfassend den Schritt:
- Aufrichten des Solarpaneels (1), so daß sich das Solarmodul mit einer Längserstreckung im wesentlichen entlang der Vertikalen erstreckt.

12. Deckelvorrichtung (5) einer Anschlußdose (3) gemäß einem der Ansprüche 1 bis 8 **gekennzeichnet durch**:
- ein auf einer Anordnungsseite (33) der Deckelvorrichtung (5) angeordnetes Verdrängerelement (31) und
- ein Reservoir (37),
wobei ein anordnungsseitiger Öffnungsbereich (39) das Reservoir (37) mit dem Äußeren der Deckelvorrichtung (5) verbindet.

13. Deckelvorrichtung (5) nach Anspruch 12, wobei das Verdrängerelement (31) zumindest bereichsweise als Reservoir (37) ausgebildet ist.

14. Deckelvorrichtung (5) nach einem der Ansprüche 12 oder 13, mit einem anordnungsseitig an der Deckelvorrichtung (5) angeordneten Dichtbereich (29), der ausgelegt ist, einen komplementären Dichtbereich (25) zu kontaktieren, um den Funktionsinnenraum der zu verschließenden Gehäusevorrichtung (7) in der Anordnungsposition der Anschlußdose (3) vom Äußeren der Anschlußdose (3) abzudichten, wobei das Verdrängerelement (31) an einem Verdrängerelementanordnungsbereich (35) der Deckelvorrichtung (5) angeordnet ist, welcher von dem Dichtbereich (29) umfangen ist.

15. Verwendung einer Deckelvorrichtung (5) gemäß einem der Ansprüche 12 bis 14 und einer Gehäusevorrichtung (7) zum Ausbilden einer Anschlußdose (3) gemäß einem der Ansprüche 1 bis 8, wobei die Deckelvorrichtung (5) an der Gehäusevorrichtung (7) angeordnet wird,
**gekennzeichnet dadurch, daß**
ein Verdrängerelement (31) der Deckelvorrichtung (5) in einen mit einem flüssigen Füllmaterial zumindest teilweise gefüllten Funktionsinnenraum (21) der Gehäusevorrichtung (7) hineinragt, um das Innenraumvolumen V_{I} des Funktionsinnenraums (21) um ein Verdrängungsvolumen V_{V} zu verkleinern.

## Claims

1. A connection socket (3), especially for solar modules (11), comprising:
- a housing device (7) with a functional interior (21), **characterized by**
- a cover device (5) with a displacement element (31) and
- a reservoir (37),
- wherein the functional interior (21) is hydraulically connectable to the reservoir (37), and
wherein the displacement element (31), in an arranged position, reduces the interior volume V_{I} of the functional interior (21) by a predetermined displacement volume Vv.

2. The connection socket (3) according to claim 1, wherein the reservoir (37) is a component of the cover device (5).

3. The connection socket (3) according to claim 1 or 2, wherein a fluid, in particular a filling material (43), located within the functional interior (21) is displaceable from the functional interior (21) by the displacement element (31) and is at least partially transferable into the reservoir (37).

4. The connection socket (3) according to one of the prior claims, wherein the predetermined displacement volume Vv is greater than 5 percent of the interior volume V_{I}, and/or wherein the volume V_{R} of the reservoir (37) is greater than or equal to the displacement volume Vv.

5. The connection socket (3) according to one of the prior claims, wherein the displacement element (31) is designed at least sectionally as a reservoir (37).

6. The connection socket (3) according to one of the prior claims, wherein the connection socket (3) has a shutoff device (41) by means of which a hydraulic connection can be shut off between the functional interior (21) and the reservoir (37), wherein the shutoff device (41) is preferably arranged on the displacement element (31).

7. The connection socket (3) according to claim 6, with an actuation element (51) that actuates the shutoff device (41) in the arranged position in order to close the hydraulic connection.

8. The connection socket (3) according to one of the prior claims, furthermore comprising:
- a sealing area (29) arranged on the cover device (5),
- a complementary sealing area (25) arranged on the housing device (7),
wherein when the cover device (5) is in the arranged position, the sealing area (29) contacts the complementary sealing area (25) in order to seal the functional interior (21) from the outside of the connection socket (3), wherein the displacement element (31) is preferably arranged on a displacement element arrangement area (35) of the cover device (5) that is surrounded by the sealing area (29).

9. A method for producing a solar panel (1) with the steps:
- provision of a solar module (11)
**characterised by** the steps:
- provision of a connection socket (3) comprising:
- a cover device (5) with a displacement element (31),
- a housing device (7) in an open position with a functional interior (21), and
- a reservoir (37),
- wherein the functional interior (21) is hydraulically connectable to the reservoir (37);
- filling of the functional interior (21) of the housing device (7) with a predetermined volume V_{P} of a liquid filling material,
wherein: V_{P} ≤ V_{I} and V_{P}+V_{V}≥ V_{I};
- transfer of the cover device (5) into an arranged position, wherein when the cover device (5) is in the arranged position, the displacement element (31) of the cover device (5) decreases the interior volume V_{I} of the functional interior (21) by a predetermined displacement volume Vv;
- hardening of the filling material.

10. The method according to claim 9, wherein the reservoir (37) is at least partially filled with filling material from the functional interior (21) of the housing device (7) when the cover device (5) is transferred from the open position into the arranged position.

11. The method according to one of claims 9 or 10, further comprising the step:
- Erection of the solar panel (1) so that a longitudinal extension of the solar module extends substantially along the vertical.

12. A cover device (5) of a connection socket (3) according to one of claims 1 to 8, **characterized by**:
- a displacement element (31) arranged on an arrangement side (33) of the cover device (5), and
- a reservoir (37),
wherein an arrangement-side opening area (39) connects the reservoir (37) to the outside of the cover device (5).

13. The cover device (5) according to claim 12, wherein the displacement element (31) is designed at least sectionally as a reservoir (37).

14. The cover device (5) according to one of the claims 12 or 13 with an arrangement-side sealing area (29) that is arranged on the cover device (5) and is designed to contact a complementary sealing area (25) in order to seal the functional interior of the housing device (7) to be sealed in the arranged position of the connection socket (3) from the outside of the connection socket (3), wherein the displacement element (31) is arranged in a displacement element arrangement area (35) of the cover device (5) that is surrounded by the sealing area (29).

15. A use of a cover device (5) according to one of claims 12 to 14, and a housing device (7) to form a connection socket (3) according to one of claims 1 to 8, wherein the cover device (5) is arranged on the housing device (7),
**characterized in that**
a displacement element (31) of the cover device (5) extends into a functional interior (21) of the housing device (7) that is at least partially filled with a liquid filling material in order to reduce the interior volume V_{I} of the functional interior (21) by a displacement volume Vv.

## Revendications

1. Boîte de jonction (3), en particulier pour modules solaires (11), comprenant :
- un dispositif de boîtier (7) avec un compartiment intérieur fonctionnel (21) **caractérisé par**
- un dispositif de couvercle (5) avec un élément de déplacement (31), et
- un réservoir (37),
le compartiment intérieur fonctionnel (21) pouvant être raccordé hydrauliquement au réservoir (37), et
l'élément de déplacement (31) réduisant d'un volume de déplacement Vv prédéfini, dans une position d'agencement, le volume de compartiment intérieur V_{I} du compartiment intérieur fonctionnel (21).

2. Boîte de jonction (3) selon la revendication 1, le réservoir (37) faisant partie du dispositif de couvercle (5).

3. Boîte de jonction (3) selon la revendication 1 ou 2, un fluide situé dans le compartiment intérieur fonctionnel (21), en particulier un matériau de remplissage (43), pouvant être déplacé par l'élément de déplacement (31) à partir du compartiment intérieur fonctionnel (21) et pouvant être acheminé au moins partiellement dans le réservoir (37).

4. Boîte de jonction (3) selon une des revendications précédentes, le volume de déplacement Vv prédéfini étant supérieur à 5 pour cent du volume de compartiment intérieur V_{I}, et/ou le volume V_{R} du réservoir (37) étant supérieur ou égal au volume de déplacement Vv.

5. Boîte de jonction (3) selon une des revendications précédentes, l'élément de déplacement (31) étant constitué en tant que réservoir (37) au moins par tronçons.

6. Boîte de jonction (3) selon une des revendications précédentes, la boîte de jonction (3) présentant un dispositif de blocage (41) par le biais duquel un raccordement hydraulique peut être bloqué entre le compartiment intérieur fonctionnel (21) et le réservoir (37), le dispositif de blocage (41) étant de préférence disposé sur l'élément de déplacement (31).

7. Boîte de jonction (3) selon la revendication 6, avec un élément d'actionnement (51) qui actionne le dispositif de blocage (41) dans la position d'agencement afin de fermer le raccordement hydraulique.

8. Boîte de jonction (3) selon une des revendications précédentes, comprenant également :
- une zone d'étanchéité (29) disposée sur le dispositif de couvercle (5) ;
- une zone d'étanchéité (25) complémentaire disposée sur le dispositif de boîtier (7),
la zone d'étanchéité (29) contactant, dans la position d'agencement du dispositif de couvercle (5), la zone d'étanchéité (25) complémentaire afin de rendre le compartiment intérieur fonctionnel (21) étanche vis-à-vis de l'extérieur de la boîte de jonction (3), l'élément de déplacement (31) étant de préférence disposé sur une zone d'agencement d'élément de déplacement (35) du dispositif de couvercle (5) qui est entourée de la zone d'étanchéité (29).

9. Procédé de fabrication d'un panneau solaire (1), avec les étapes :
- préparation d'un module solaire (11)
**caractérisé par** les étapes:
- préparation d'une boîte de jonction (3) comprenant :
-- un dispositif de couvercle (5) avec un élément de déplacement (31),
-- un dispositif de boîtier (7) dans une position ouverte avec un compartiment intérieur fonctionnel (21) et
-- un réservoir (37),
le compartiment intérieur fonctionnel (21) pouvant être raccordé hydrauliquement au réservoir (37) ;
- remplissage du compartiment intérieur fonctionnel (21) du dispositif de boîtier (7) avec un volume V_{P} prédéfini d'un matériau de remplissage liquide,
où : V_{P} ≤ V_{I} et V_{P}+V_{V}≥V_{I} ;
- acheminement du dispositif de couvercle (5) dans une position d'agencement, l'élément de déplacement (31) du dispositif de couvercle (5) réduisant d'un volume de déplacement Vv prédéfini, dans la position d'agencement du dispositif de couvercle (5), le volume de compartiment intérieur V_{I} du compartiment intérieur fonctionnel (21) ;
- durcissement du matériau de remplissage.

10. Procédé selon la revendication 9, le réservoir (37) étant, lors de l'acheminement du dispositif de couvercle (5) depuis la position ouverte vers la position d'agencement, rempli au moins partiellement de matériau de remplissage en provenance du compartiment intérieur fonctionnel (21) du dispositif de boîtier (7).

11. Procédé selon une des revendication 9 ou 10, comprenant également l'étape :
- redressement du panneau solaire (1) de telle sorte que le module solaire s'étende avec une étendue longitudinale essentiellement le long de la verticale.

12. Dispositif de couvercle (5) d'une boîte de jonction (3) selon une des revendications 1 à 8, **caractérisé par** :
- un élément de déplacement (31) disposé sur un côté d'agencement (33) du dispositif de couvercle (5) et
- un réservoir (37),
une zone d'ouverture côté agencement raccordant le réservoir (37) à l'extérieur du dispositif de couvercle (5).

13. Dispositif de couvercle (5) selon la revendication 12, l'élément de déplacement (31) étant constitué en tant que réservoir (37) au moins par tronçons.

14. Dispositif de couvercle (5) selon une des revendications 12 ou 13, avec une zone d'étanchéité (29), disposée côté agencement sur le dispositif de couvercle (5), qui est constituée pour contacter une zone d'étanchéité (25) complémentaire afin de rendre étanche, vis-à-vis de l'extérieur de la boîte de jonction (3), le compartiment intérieur fonctionnel du dispositif de boîtier (7) à fermer, dans la position d'agencement de la boîte de jonction (3), l'élément de déplacement (31) étant disposé sur une zone d'agencement d'élément de déplacement (35) du dispositif de couvercle (5) qui est entourée de la zone d'étanchéité (29).

15. Utilisation d'un dispositif de couvercle (5) selon une des revendications 12 à 14 et d'un dispositif de boîtier (7) pour la formation d'une boîte de jonction (3) selon une des revendications 1 à 8, le dispositif de couvercle (5) étant disposé sur le dispositif de boîtier (7),
**caractérisée en ce**
**qu'**un élément de déplacement (31) du dispositif de couvercle (5) fait saillie dans un compartiment intérieur fonctionnel (21) du dispositif de boîtier (7) rempli au moins partiellement d'un matériau de remplissage liquide pour réduire d'un volume de déplacement Vv le volume de compartiment intérieur V_{I} du compartiment intérieur fonctionnel (21).
